# NEUE EUROPÄISCHE PATENTSCHRIFT

(11) **EP 2 321 537 B2**
(45) Veröffentlichungstag und Bekanntmachung des Hinweises auf die Entscheidung über den Einspruch: **18.11.2015**
(45) Hinweis auf die Patenterteilung: 29.02.2012
(21) Anmeldenummer: 09777300.6
(22) Anmeldetag: 20.07.2009
(51) Int. Cl.: F15B 1/02, F16K 31/56

(54) **STELLEINRICHTUNG UND MIT EINER DERARTIGEN STELLEINRICHTUNG AUSGEFÜHRTE VENTILANORDNUNG**
CONTROL DEVICE, AND VALVE ARRANGEMENT HAVING SUCH A CONTROL DEVICE
DISPOSITIF D'ACTIONNEMENT ET SYSTÈME DE SOUPAPE COMPORTANT UN TEL DISPOSITIF D'ACTIONNEMENT

(30) Priorität: 08.08.2008 DE 102008036980
(43) Veröffentlichungstag der Anmeldung: 18.05.2011
(73) Patentinhaber: Robert Bosch GmbH, 70469 Stuttgart (DE)
(72) Erfinder: FRÖHLICH, Udo, 97851 Rothenfels (DE); DÖRTOLUK, Ibrahim, 63808 Haibach (DE); SCHNURR, Bernd, 97816 Lohr am Main (DE); TAUBER, Richard, 63869 Heigenbrücken (DE)
(74) Vertreter: Thürer, Andreas
(86) Internationale Anmeldenummer: PCT/EP2009/005248
(87) Internationale Veröffentlichungsnummer: WO 2010/015323

(56) Entgegenhaltungen:
- EP-A- 1 199 501
- EP-A- 1 413 810
- EP-A1- 0 077 596
- DE-A1- 3 741 261
- DE-A1-102004 044 962
- DE-A1-102004 045 011
- DE-C1- 10 155 587
- GB-A1- 819 075
- JP-A- S63 192 968
- Regeltechnik Kornwestheim GmbH, "Motorregelventile mit Schnellschlußeinrichtung", Datenblatt Vol.5310, Seiten 5310-7007, 5310-7008 und Zeichnung 5000-7032
- Regeltechnik Kornwestheim GmbH, "Schnellschluß für Motorventile", Datenblatt Vol. 6151, Seiten 6151-7020 bis 6151-7028
- ANSI/API Standard 612, Petroleum, Petrochemical and Natural Gas Industries - Steam Turbines - Special-purpose Applications, Fiftth Edition vom April 2003
- Auszug der sechsten Auflage der der Norm ANSI/API Standard 612, Petroleum, Petrochemical and Natural Gas Industries - Steam Turbines - Special-purpose Applications, Sixth Edition vom November 2005 (vgl. A10)
- Schreiben von Herrn Peter Laube (Geschäftsführer der Fa. Regeltechnik Kornwestheim GmbH) an Herrn Felix Lehmann (IP-Manager der Einsprechenden) in Reaktion auf A12 (siehe unten), in dem die öffentliche Zugänglichkeit der Datenblätter A7 undA8 bestätigt wird.
- Ergänzte Version von A11

## Beschreibung

### Beschreibung

Die Erfindung betrifft eine Stelleinrichtung gemäß dem Oberbegriff des Patentanspruches 1 und eine mit einer derartigen Stelleinrichtung ausgeführte Ventilanordnung.

In der EP 1 413 810 A1 ist eine gattungsgemäße Stelleinrichtung für ein Turbinenventil zur Steuerung der Gas- oder Dampfzufuhr einer Turbine oder eine Prozessarmatur zur Steuerung eines Fluids, eine Pitch-Verstellung eines Windrades oder dergleichen offenbart. Derartige Stelleinrichtungen haben üblicherweise einen Stellantrieb, der beim Gegenstand der EP 1 413 810 A1 als elektrischer Spindeltrieb ausgeführt ist. Bei einer Gasturbine lässt sich mittels einer derartigen Stelleinrichtung beispielsweise ein Öffnungsquerschnitt einer Armatur zur Einstellung der Brennstoff- bzw. Gaszufuhr verstellen. In einem Notfall, beispielsweise bei einem Stromausfall oder einer Störung soll die Armatur - oder bei einem Windrad der Pitch-Winkel - zurückgestellt werden, um eine Beschädigung der Anlage zu vermeiden. Dazu ist bei der bekannten Lösung dem Spindeltrieb ein Kniehebelmechanismus zugeordnet, der im regulären Betrieb, d.h. bei hinreichender Stromversorgung in einer Strecklage arretiert ist, in der eine Vorspannfeder gespannt ist. Dieser Kniehebel wirkt auf einen Ventilkörper der Armatur (bei einer Gasturbine) oder auf den Stellmechanismus zur Einstellung des Pitch-Winkels bei einem Windrad. Die Verriegelung des Kniehebels erfolgt nur bei hinreichender Stromversorgung; bei einem Stromausfall gibt der Verriegelungsmechanismus den Kniehebel frei, so dass er über die Vorspannfeder aus seiner Streckstellung in seine Knickstellung verstellt wird, und entsprechend dieses Verstellweges das Ventilglied bzw. der Pitch-Winkel-Einstellmechanismus in seine vorbestimmte Grundposition zurückverstellt wird.

Nachteilig bei dieser Lösung ist, dass der Kniehebelmechanismus einen erheblichen Bauraum erfordert und des Weiteren relativ komplex im Aufbau ist, so dass der vorrichtungstechnische Aufwand erheblich ist.
In der DE 10 2004 045 011 A1 ist eine Kolbenzylindereinheit z.B. zur Verwendung bei einem Neigezug beschrieben. Die Kolbenzylindereinheit besitzt einen Stellkolben, der mit einer zwischen seine Druckkammern geschalteten Pumpe beliebig verfahren werden kann. Zusätzlich ist ein Zentrierzylinder vorhanden, an dem sich eine Feder abstützt. Sobald eine Kammer des Zentrierrylinders über ein Ventil hydraulisch entlastet wird, fährt der Zentrierzylinder in eine vorgegebene Mittelstellung und nimmt den Stellkolben in diese Mittelstellung mit. Die Geschwindigkeit des Zentrierzylinders ist mittels einer Drossel einstellbar.
Eine ähnliche Kolbenzylindereinheit ist in der DE 10 2004 044 962 A2 zu sehen. Dort tritt an die Stelle der Feder ein Druckspeicher, der bei Bedarf und nach Freischaltung eines Sperrventils einen Hilfskolben in eine Zentrierstellung bewegt.

Demgegenüber liegt der Erfindung die Aufgabe zugrunde, eine Stelleinrichtung zu schaffen, die eine Notfallbetätigung mit geringem vorrichtungstechnischem Aufwand bei hoher Betriebssicherheit ermöglicht. Eine derartige Stelleinrichtung soll auch bei einer Ventilanordnung, insbesondere einem Ventil zur Steuerung der Dampf- oder Gaszufuhr einer Turbine oder allgemein einer Prozessarmatur zur Steuerung eines Prozessfluids einsetzbar sein.

Diese Aufgabe wird durch eine Stelleinrichtung mit den Merkmalen des Patentanspruches 1 gelöst. Zudem wird eine Ventilanordnung bereitgestellt.

Erfindungsgemäß ist die Stelleinrichtung mit einem Stellantrieb zur Betätigung eines Ventils oder einer anderen Vorrichtung, beispielsweise einer Verstelleinrichtung für den Pitch-Winkel eines Windrades mittels eines Stellglieds ausgeführt. Diesem Stellantrieb ist eine Notbetätigungseinrichtung zugeordnet, über die das Stellglied im Wesentlichen unabhängig von der Ansteuerung des Stellantriebs bei einer Störung zurückgestellt werden kann. Diese Notbetätigungseinrichtung hat einen Energiespeicher, dessen gespeicherte Energie zum Rückstellen freisetzbar ist. Erfindungsgemäß hat die Notbetätigungseinrichtung einen Kolben, der einerseits vom Energiespeicher und andererseits von einem Druck in einem Druckraum beaufschlagt ist, der über ein Schaltventil mit einem Tank oder dergleichen verbindbar ist, um die im Energiespeicher gespeicherte Energie freizusetzen. Dabei ist der Kolben derart ausgebildet, dass er das Stellglied bei einer Entlastung des Druckraums in Rückstellrichtung verstellt.

Bei dieser Lösung kann somit der Energiespeicher hydraulisch vorgespannt oder verriegelt und durch Umschalten des Schaltventils aktiviert werden, um den Stellantrieb zurückzusetzen.

Um eine Beschädigung des Stellantriebs und der davon verstellten Komponenten zu verhindern, ist eine mit dem Stellglied, über einen Mitnehmer gekoppelte Dämpfungseinrichtung vorgesehen.

Die Dämpfungseinrichtung weist einen mit dem Stellglied mechanisch gekoppelten Gleichgang- oder Differentialzylinder auf.

Hierbei ist dieser Gleichgang- oder Differentialzylinder mit einem sich bei der Bewegung des Stellglieds verkleinernden Druckraum ausgeführt, der über eine Dämpfungsdrossel oder einen Drosselspalt mit einem anderen, sich entsprechend vergrößernden Druckraum verbunden ist.
Zusätzlich zur vorbeschriebenen Dämpfungseinrichtung ist erfindungsgemäß der Kolben mit einer Endlagendämpfung ausgeführt.
Weitere Ausführungsformen sind Gegenstand der Unteransprüche.

Bei einem Ausführungsbeispiel der Erfindung hat die Dämpfungseinrichtung einen Fangzylinder, der im Druckmittelströmungspfad zwischen dem Schaltventil und dem Tank angeordnet ist, und der einen von einer Feder in Schließrichtung vorgespannten Fangkolben hat, der in Öffnungsrichtung von dem Druck stromabwärts des Schaltventils beaufschlagt ist und der nach einem vorbestimmten Hub einen Drosselquerschnitt zum Tank aufsteuert, wobei der Fangkolben im Endlagenbereich des Kolbens vom Stellglied in Schließrichtung bewegt wird.

Bei einem besonders bevorzugten Ausführungsbeispiel läuft der Fangkolben des Fangzylinders mit dem Stellglied, im vorliegenden Fall einem Mitnehmer des Spindeltriebs mit. Nach einem vorbestimmten Hub des Fangkolbens wird ein Drosselquerschnitt zugesteuert, so dass die Bewegung des Stellglieds entsprechend gebremst wird. Der sich dabei verkleinernde Druckraum des Fangzylinders ist über eine Tankleitung und ein darin angeordnetes Tankventil mit dem Tank verbunden. Ein sich bei der Notbetätigung vergrößernder Druckraum des Fangzylinders ist ebenfalls mit dem Tank und/ oder dem anderen, sich verkleinernden Druckraum verbunden.

Bei einer Variante dieses Ausführungsbeispiels ist das Schaltventil als 3/2-Wegeventil ausgebildet, das in seiner federvorgespannten Grundposition den Druckmittelströmungspfad von dem Druckraum des Betätigungszylinders zum Tank öffnet und in seiner Schaltstellung absperrt.

Diese Dämpfungsdrossel kann beispielsweise als Drosselrückschlagventil und verstellbar ausgeführt sein.

Es ist auch möglich, der Dämpfungsdrossel oder dem Drosselspalt ein Schaltventil parallel zu schalten, das zum Dämpfen elektrisch oder hydraulisch in eine Schließposition verstellt ist.

Dabei können das Schaltventil und das Umschaltventil eine bauliche Einheit bilden, welche insbesondere als 3/2-Wegeschaltventil ausgeführt ist.

Um eine Beschädigung der Stelleinrichtung beim Auflaufen des Kolbens auf das Stellglied zu vermeiden, kann eine Aufprallfeder vorgesehen werden, die beim Auflaufen auf das Stellglied gespannt wird. Diese Aufprallfeder kann mit einer funkenhemmenden Anlagefläche ausgeführt sein.

Zusätzlich zur vorbeschriebenen Dämpfungseinrichtung kann der Kolben mit einer herkömmlichen Endlagendämpfung ausgeführt sein.

Zum hydraulischen Laden des Energiespeichers kann eine Hilfspumpe vorgesehen sein, über die im genannten Druckraum ein hinreichender Druck aufgebaut werden kann. Diese Pumpe kann auch durch die Fangeinrichtung gebildet sein.

Zum Schutz der hydraulischen Komponenten gegen einen zu hohen Druck kann im Druckmittelströmungspfad zwischen dem Fangzylinder und dem Schaltventil ein Druckbegrenzungsventil vorgesehen werden.

Bei einem Ausführungsbeispiel ist in einem stromaufwärts des Fangzylinders gelegenen Teil des Druckmittelströmungspfads eine Bypassleitung vorgesehen, über die eine Verbindung zum Tank herstellbar ist und in der ein zum Tank hin öffnendes Rückschlagventil vorgesehen ist, dessen Öffnungsdruck größer als der zum Öffnen des Fangventils erforderliche Druck ist. D.h. dieses Rückschlagventil bleibt geschlossen, wenn das Fangventil seine Dämpfungsfunktion erfüllt und öffnet erst bei einer wesentlichen Überschreitung des zum Verstellen des Fangventils erforderlichen Drucks.

Zur Begrenzung der Kolbengeschwindigkeit kann im Druckmittelströmungspfad zwischen dem Druckraum und dem Tank ein Stromregelventil (Drossel, Blende) vorgesehen werden, das vorzugsweise verstellbar ausgeführt ist.

Bei einem besonders einfach ausgeführten Ausführungsbeispiel ist der Stellantrieb als Spindeltrieb ausgeführt. Prinzipiell können jedoch auch pneumatische oder hydraulische Stellantriebe verwendet werden.

Der Energiespeicher zur Rückstellung kann ein mechanischer Speicher, insbesondere ein Federspeicher, ein komprimiertes Fluid oder Gas und/ oder ein Elastomer sein.

Bei einer besonders kompakten Lösung sind alle wesentlichen Bauelemente der Stelleinrichtung zu einer Antriebseinheit zusammengefügt.

Dabei können der Stellantrieb, der Energiespeicher und der Druckraum koaxial um eine Stellachse der Stelleinrichtung angeordnet sein.

Die Stelleinrichtung kann mit einem geschlossenen, insbesondere vorgespannten hydraulischen System ausgeführt sein, welches den Druckraum und/ oder die Fang- bzw. Dämpfungseinrichtung umfasst.

Der Aufbau ist besonders vorteilhaft, wenn die Fang- bzw. Dämpfungseinrichtung als Pumpzylinder zum Füllen des Druckraums konfigurierbar ist (interne Pumpe).

Die Betriebssicherheit der Stelleinrichtung ist weiter verbessert, wenn die Position des Stellglieds durch ein oder mehrere Wegmesssysteme, insbesondere durch lineare Wegmesssysteme erfasst werden.

Bei einer Variante der Erfindung sind Mittel vorgesehen, über die die Temperatur innerhalb des Gehäusemantels in einem vorbestimmten Temperaturbereich gehalten wird.

Bei einem Ausführungsbeispiel der Erfindung sind Mittel vorgesehen, durch welche die Fang- oder Dämpfungseinrichtung feststellbar ist und die durch die Notbetätigungseinrichtung übersteuert werden können.

Die Stelleinrichtung kann so ausgeführt sein, dass ein Funktionstest der Notbetätigungseinrichtung im Normalbetrieb durchgeführt werden kann. Diese Mittel können beispielsweise einen Schalter aufweisen, welcher einen Beginn der Rückstellbewegung des Kolbens erfasst.

Zur Erhöhung der Betriebssicherheit von Gas oder Dampfturbinen können zwei Ventile mit den vorbeschriebenen Stelleinrichtungen in Reihe geschaltet werden.

Sonstige vorteilhafte Weiterbildungen der Erfindung sind Gegenstand weiterer Unteransprüche.

Bevorzugte Ausführungsbeispiele werden im Folgenden anhand schematischer Zeichnungen näher erläutert. Es zeigen:
Figur 1 ein stark vereinfachtes Funktionsschema einer erfindungsgemäßen Stelleinrichtung für ein Gasturbinenventil in der Normalfunktion;
Figur 2 die Stelleinrichtung in der Notfallfunktion;
Figur 3 ein Hydraulikschaltschema der Stelleinrichtung gemäß den Figuren 1 und 2;
Figur 4 eine dreidimensionale Darstellung einer Stelleinrichtung gemäß Figur 3;
Figur 5 eine nicht erfindungsgemäße Variante der Stelleinrichtung mit Tauchspule:
Figur 6 ein weiteres Ausführungsbeispiele der Stelleinrichtung mit einem Fangzylinder und Drosselrückschlagventil;
Figur 7 eine Variante des Ausführungsbeispiels gemäß Figur 7 mit einem Schaltventil anstelle eines Rückschlagventils;
Figur 8 eine Variante mit Hilfspumpe zum Aufladen des Energiespeichers
Figur 9 ein nicht erfindungsgemäßes Ausführungsbeispiel einer Stelleinrichtung mit einem elektro- oder magnetorheologisch wirkendem Dämpfer;
Figur 10 eine Stelleinrichtung mit elektrischer Notfallbetätigung:
Figur 11 ein Regelkonzept für eine Gasturbine mit erhöhter Betriebssicherheit und
Figur 12 ein Ausführungsbeispiel mit einer mitlaufenden Fangeinrichtung.

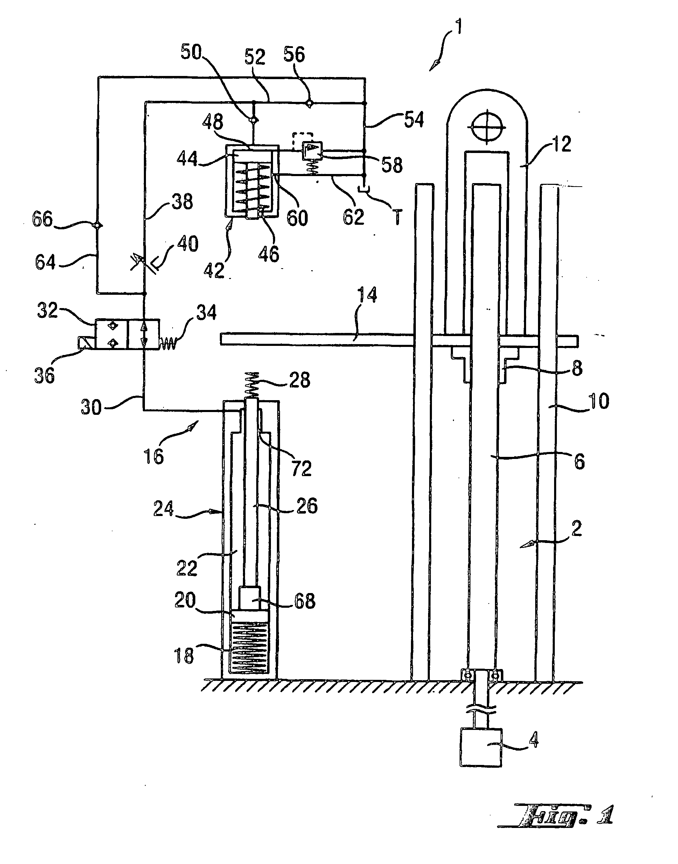

Figur 1 zeigt ein Funktionsschaubild einer erfindungsgemäßen Stelleinrichtung 1 zur Betätigung eines Gas- oder Dampfturbinenventils oder einer Prozessarmatur, über das der Volumenstrom einstellbar ist. Diese Stelleinrichtung 1 hat einen Spindeltrieb 2 mit einem Spindelmotor 4, der eine Gewindespindel 6 antreibt, die ihrerseits mit einer Spindelmutter 8 kämmt. Beim dargestellten Ausführungsbeispiel ist die Spindel 6 drehbar an einem Gestell 10 gelagert. Die Mutter 8 ist drehfest, jedoch axial verstellbar auf der Spindel 6 geführt, so dass bei einer Drehbewegung der Spindel 6 die Mutter 8 einen Linearvorschub durchführt. Die Linearbewegung der Spindel wird auf eine Konsole 12 übertragen, über die das Turbinenventil (Armatur) verstellbar ist. An der Gewindespindel 6 bzw. der Konsole 12 ist des Weiteren ein in der Darstellung gemäß Figur 1 radial auskragender Mitnehmer 14 gelagert, der entsprechend der Mutter 8 und der Konsole 12 linear verschoben wird.

Durch Ansteuerung des Spindelmotors 4 mit einer im Folgenden noch näher beschriebenen Steuerung kann somit das Turbinenventil in Abhängigkeit von der Verschiebung der Mutter 8 verstellt werden. In dem Fall, in dem dieses Turbinenventil aufgesteuert ist und somit ein gewisser Dampf-/Gasvolumenstrom eingestellt ist, würde bei einem Stromausfall oder anlageseitigem Störfall das Turbinenventil offen bleiben, so dass die Funktion der Turbine nicht mehr kontrollierbar ist. Für einen derartigen Notfall ist eine Notbetätigungseinrichtung 16 vorgesehen, durch die die Konsole 12 in eine Grundposition zurückgestellt werden kann, in der das Gasturbinenventil geschlossen ist. Bei der in Figur 1 dargestellten Lösung erfolgt diese Rückstellung mechanisch, wobei zur Notfunktion keinerlei Bauelemente elektrisch betätigt werden müssen. Die Notbetätigungseinrichtung 16 besteht im Wesentlichen aus einem Energiespeicher, im vorliegenden Fall einem Federspeicher 18, der über einen Kolben 20 vorgespannt ist. Dieser Kolben 20 begrenzt einen Druckraum 22 eines Betätigungszylinders 24. Dieser wird von einer Kolbenstange 26 des Kolbens 20 durchsetzt, die aus dem Betätigungszylinder 24 vorsteht und an deren auskragendem Endabschnitt eine Aufprallfeder 28 angeordnet ist.

Der Druckraum 22 ist über einen Kanal 30 mit einem elektrisch betätigten Schaltventil 32 verbunden, das als Sitzventil ausgeführt ist. Dieses ist über eine Vorspannfeder 34 in seine Öffnungsposition vorgespannt und lässt sich durch Bestromen eines Schaltmagneten 36 in seine Schließstellung verstellen. Der Ausgang des Schaltventils 32 ist an eine Entlastungsleitung 38 angeschlossen, in der ein Stromventil 40 zur Einstellung des Druckmittelvolumenstroms über das Schaltventil 32 vorgesehen ist. Das Stromventil 40 ist mit einem veränderlichen Querschnitt ausgeführt, kann jedoch auch mit konstantem Querschnitt ausgebildet sein (Blende oder Drossel).

Diese Entlastungsleitung 38 führt zum Eingang eines Fangzylinders 42, der beim dargestellten Ausführungsbeispiel als Differentialzylinder ausgeführt ist, wobei die Bodenseite eines Fangkolbens 44 mit dem Druck in der Entlastungsleitung 38 beaufschlagt ist. In der dargestellten Grundposition ist der Fangkolben 44 über eine Feder 46 in eine Grundposition vorgespannt, in der ein bodenseitiger Zylinderraum 48 minimal ist. Im Druckmittelströmungspfad zwischen dem Zylinderraum 48 und dem Stromventil 40 ist ein Rückschlagventil 50 vorgesehen, das eine Rückströmung von Druckmittel vom Zylinderraum 48 in Richtung zum Schaltventil 32 verhindert. Im Bereich zwischen dem Stromventil 40 und dem Rückschlagventil 50 zweigt von der Entlastungsleitung 38 eine Bypassleitung 52 ab, die in einen Tankkanal 54 einmündet. In dieser Bypassleitung 52 ist ein vorgespanntes Rückschlagventil 56 vorgesehen, das bei Überschreiten seiner Schließkraft eine Druckmittelverbindung zur Tankleitung 54 öffnet.

Der Zylinderraum 48 ist des Weiteren über ein Druckbegrenzungsventil 58 mit der Tankleitung 54 verbunden, so dass über das Druckbegrenzungsventil 58 der Maximaldruck im Zylinderraum 48 und somit auch in der Entlastungsleitung 38 begrenzt ist.

Der Fangkolben 44 öffnet nach einem vorbestimmten Hub einen Drosselspalt 60, der über einen Ablaufkanal 62 mit der zu einem Tank T führenden Tankleitung 54 verbunden ist.

Der Leitungsabschnitt zwischen dem Stromregelventil 40 und dem Wegeventil 32 ist über eine Spannleitung 64 mit der Tankleitung 54 verbunden. In dieser Spannleitung 64 ist ein als Rückschlagventil ausgeführtes Spannventil 66 angeordnet, das eine Druckmittelströmung vom Tank in Richtung zum Druckraum 22 hin zulässt, um den Federspeicher 18 aufzuladen.

Im regulären Betrieb erfolgt die Verstellung des Gasturbinenventils alleine über den Spindeltrieb 2 durch Ansteuerung des elektrischen Spindelmotors 4. Dabei ist der Schaltmagnet 36 des Schaltventils 32 bestromt, so dass dieses in seine leckagefreie Schaltstellung verstellt ist. Der Federspeicher 18 ist aufgeladen, da im Druckraum 22 ein Druck anliegt, der ausreicht, um den Federspeicher 18 in seiner vorgespannten Position zu halten. Das Druckmittel ist dabei über das Schaltventil 32 eingespannt. Der Fangzylinder 42 befindet sich in seiner dargestellten Grundposition, in der der Zylinderraum 48 minimal ist und auch die Druckmittelverbindung zum Drosselspalt 60 zugesteuert ist.

Der Betätigungszylinder 24 ist in an sich bekannter Weise mit einer Endlagendämpfung ausgeführt, wobei ein radial erweiterter Dämpfungsabschnitt 68 der Kolbenstange 26 in einen Dämpfungsringraum 72 des Betätigungszylinders 24 eintaucht, so dass Druckmittel über einen Drosselspalt in den Dämpfungsringraum 72 verdrängt wird und somit die Kolbenbewegung im Bereich der Endlage gedämpft wird. Diese Dämpfung wird zusätzlich noch durch den Fangzylinder 42 unterstützt.

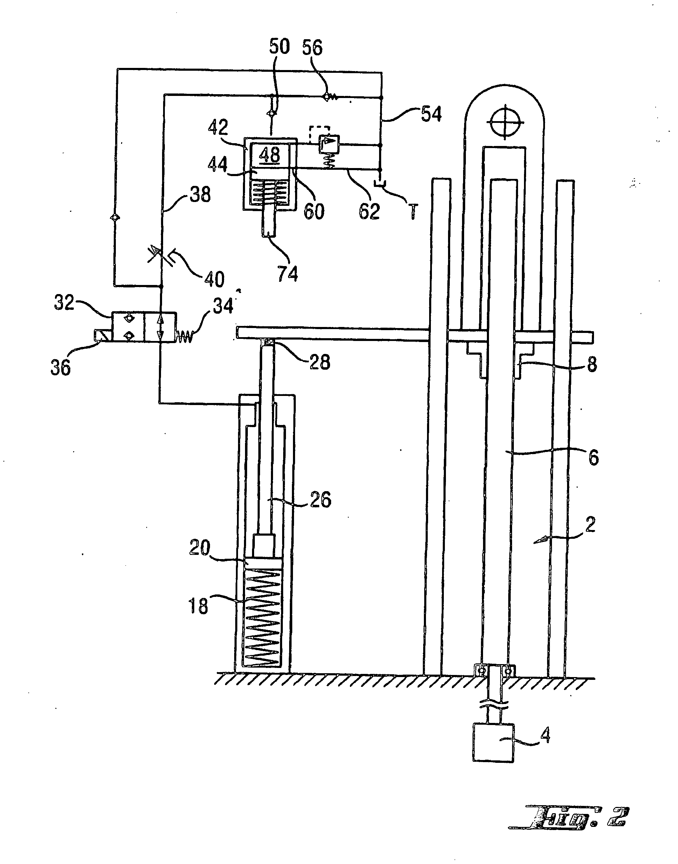

Bei einem Stromausfall oder Störfall nimmt der Spindeltrieb 2 eine undefinierte Lage ein. Bei einem derartigen Notfall wird deshalb der Betätigungsmagnet 36 stromlos geschaltet, so dass das Schaltventil 32 über die Vorspannfeder 34 in seine Öffnungsstellung verstellt wird. Dadurch kann Druckmittel aus dem Druckraum 22 über das geöffnete Schaltventil 32 und das Rückschlagventils 50 hin zum Zylinderraum 48 strömen, so dass sich im Zylinderraum 48 ein Druck einstellt, der durch das Rückschlagventil 56 vorgegeben ist. Der Kolben 44 wird dabei gegen die Kraft der Feder 46 in Axialrichtung aus seiner dargestellten Grundposition heraus gegen die Kraft der Feder 46 verschoben bis der Drosselspalt 60 aufgesteuert wird, so dass das Druckmittel vom Druckraum 22 über das geöffnete Schaltventil 32, den Stromregler 40, das Rückschlagventil 50, den Zylinderraum 48, den Drosselspalt 60 und den Ablaufkanal 62 zum Tank T abströmen kann, so dass der Druck im Druckraum 22 abgebaut wird. Dabei wird der Kolben 20 durch die Kraft des Federspeichers 18 verstellt, so dass Druckmittel aus dem Druckraum 22 ausgeschoben wird und nach einem Hub die Aufprallfeder 28 auf den Mitnehmer 14 aufläuft (siehe Figur 2). In dem Fall, in dem der Druck im Zylinderraum 48 die Schließkraft des vorgespannten Rückschlagventils 56 übersteigt, öffnet dieses, so dass ein Teil des Druckmittelvolumenstroms direkt zum Tank T abströmt und der Fangkolben 44 in seiner in Figur 2 dargestellten Position verbleibt, in der der Drosselspalt 60 aufgesteuert ist.

Da die Kraft des Federspeichers 18 anfangs wesentlich größer als die Kraft der Aufprallfeder 28 ist, wird letztere gespannt und schließlich der Mitnehmer 14 mitgenommen. Wie eingangs erläutert, ist dieser Mitnehmer 14 mit der Mutter 8 des Spindeltriebs 2 verbunden, so dass entsprechend die mit keinem selbsthemmenden Gewinde ausgeführte Mutter 8 in Axialrichtung verstellt wird und dabei die Spindel 6 in eine Drehbewegung versetzt wird. Nach einem weiteren Hub des Kolbens 20 läuft der Mitnehmer 14 auf eine Fangkolbenstange 74 auf, die zum Mitnehmer 14 hin aus dem Fangzylinder 42 auskragt. Dadurch wird der Fangkolben 44 wieder in Richtung seiner Grundposition zurückverstellt und dabei der Drosselspalt 60 langsam zugesteuert, so dass der Druckmittelvolumenstrom vom Druckraum 22 zum Tank T hin angedrosselt wird und entsprechend auch die Bewegung des Kolbens 20 und somit des Mitnehmers 14 verlangsamt wird, so dass zum Ende des Hubs hin die Spindeldrehzahl verringert wird bis das Gasturbinenventil seine Schließstellung erreicht hat und der Spindeltrieb in seine Nullposition zurückgestellt ist. In dieser Position ist dann der Drosselspalt 60 vollständig zugesteuert und der Federspeicher 18 übt die erforderliche Federkraft aus.

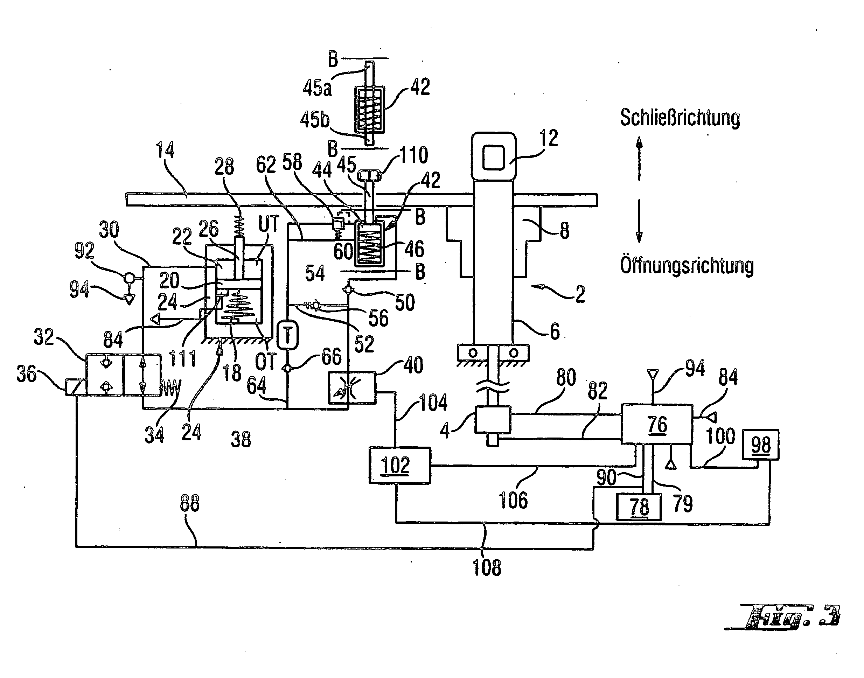

Der Ladevorgang zum Aktivieren der Notbetätigungseinrichtung 16 wird im Folgenden anhand der Figur 3 erläutert. In Figur 3 ist ein Schaltschema der gesamten Stelleinrichtung gezeigt, die nach dem anhand der Figuren 1 und 2 erläuterten Funktionsprinzip arbeitet, wobei im Folgenden lediglich die in den Figuren 1 und 2 nicht dargestellten Funktions- und Regelelemente erklärt werden und im Übrigen auf die obigen Ausführungen verwiesen wird. Wie erläutert erfolgt die Verstellung des Prozessventils oder Gas- bzw. Dampfturbinenventils (oder des Antriebs für die Pitch-Winkel-Verstellung) über den elektrischen Spindeltrieb 2 mit dem Spindelmotor 4, der in Axialrichtung festgelegten und drehbar gelagerten Spindel 6, der Spindelmutter 8 und der Konsole 12, die an der Armaturspindel des Gas- oder Dampfturbinenventils angreift, um dieses in Schließrichtung oder in Öffnungsrichtung zu verstellen (siehe Pfeile in Figur 3). Die Ansteuerung des Spindelmotors 4 erfolgt über eine Motorregeleinrichtung 76. Die SPS ist über eine Feldbus- oder Analogschnittstellenverbindung 79 mit der Regeleinrichtung 76 verbunden. Der Druck im Druckraum 22 des Betätigungszylinders 24 wird über eine Drucküberwachung 92 erfasst und über eine Drucküberwachungsleitung 94 zur Regeleinrichtung 76 gemeldet.

Die Leistungsversorgung des Spindelmotors 4 erfolgt über eine elektrische Versorgungsleitung 80, die an die Regeleinrichtung 76 angeschlossen ist. Das Motorfeedback wird über eine Feedbacksignalleitung 82 zur Regeleinrichtung 76 gemeldet. Des Weiteren wird über eine Überwachungsleitung 84 gemeldet, ob der Federspeicher 18 geladen ist (Feder gespannt).

Beim dargestellten Ausführungsbeispiel ist die Stelleinrichtung des Weiteren noch mit einer unterbrechungsfreien Stromversorgung USV 98 ausgeführt, über die im Notfallbetrieb, d.h. bei einem Stromausfall die Leistungsversorgung für den Motor und die Steuerspannung für die Regeleinrichtung 76 bereitgestellt werden kann. Die Ansteuerung des in diesem Ausführungsbeispiel verstellbaren Stromregelventils 40 erfolgt über eine Stromregeleinrichtung 102, die über eine Stromregelsignalleitung 104 mit dem Stromregelventil 40 verbunden ist. Die Stromregeleinrichtung 102 ist ihrerseits über eine Signalweiterleitung 106 mit der Regeleinrichtung 76 verbunden. Im Notfallbetrieb wird die Stromregeleinrichtung 102 von der USV 98 über eine Steuerspannungsleitung 108 mit der erforderlichen Steuerspannung versorgt, um den Druckmittelvolumenstrom zur Verstellung des Spindeltriebs 2 einzustellen.

Zum Laden des Federspeichers 18, d.h. beim dargestellten Ausführungsbeispiel zum Spannen des Federpakets des Federspeichers 18 bleibt das Schaltventil 32 stromlos, so dass es durch die Kraft der Vorspannfeder 34 in seine Öffnungsposition vorgespannt ist. Nach der vorbeschriebenen Notbetätigung ist der Fangkolben 44 mit seiner Fangkolbenstange 45 vollständig ausgefahren, wobei der Mitnehmer 14 an einer an der Fangkolbenstange 45 befestigten Mutter 110 anliegt, da - wie vorstehend beschrieben - der Mitnehmer 14 im Endlagenbereich den Fangkolben 44 wieder in seine federvorgespannte Schließposition zurückbewegt hat, um die Rückstellung des Spindeltriebs 2 zu dämpfen. Durch entsprechende Ansteuerung des Spindelmotors 4 wird die Spindel 6 und damit der Mitnehmer 14 in Öffnungsrichtung bewegt, so dass die Aufprallfeder 28 gestaucht wird und der Kolben 20 in Richtung OT (siehe Figur 3) zurückbewegt wird, so dass der Federspeicher 18 aufgeladen wird. Durch diese Verstellung des Kolbens 20 vergrößert sich der Druckraum 22, so dass Druckmittel vom Tank T über das Rückschlagventil 66, die Füllleitung 64 und die Entlastungsleitung 38 sowie das offene Schaltventil 32 nachgesaugt wird.

Dieser Vorgang wird so lange aufrechterhalten bis entweder die Regeleinrichtung 76 eine Motorübertemperaturwarnung generiert oder der Federspeicher 18 auf seine Soll-Vorspannung gebracht ist.

Im Falle einer Motorübertemperatur wird das Schaltventil 32 bestromt und somit in seine Sperrstellung verstellt, so dass das Druckmittel im Druckraum 22 eingespannt ist. Der Spindelmotor 4 bleibt an der aktuellen Position in der Regelung, wobei allerdings kein Axialvorschub in der Gewindemutter 8 erfolgt. Über die Regeleinrichtung 76 wird die Wicklungstemperatur des Spindelmotors 4 überwacht. Wenn der Spindelmotor abgekühlt ist, meldet die Regeleinrichtung 76 der SPS 78, so dass das Wegeventil 32 wieder stromlos geschaltet wird , so dass es in seine federvorgespannte Öffnungsposition zurückgestellt wird. Die Ansteuerung des Spindelmotors 4 erfolgt dann so lange bis der Federspeicher 18 mit der gewünschten Vorspannung beaufschlagt ist. Daraufhin erfolgt eine Verriegelung des Federspeichers 18 durch Bestromen des Schaltventils 32, so dass das Druckmittel im Druckraum 22 eingespannt ist und der Kolben 20 den Federspeicher 18 auf Vorspannung hält. Diese wird über die Signalleitung 84 und einen entsprechenden Überwachungsschalter oder eine Schaltergruppe 111 überwacht und zur Regeleinrichtung 76 gemeldet.

Wie eingangs beschrieben, bleibt im Normalbetrieb das Schaltventil 32 bestromt, wobei über den Spindeltrieb 2 jede vorbestimmte Position im Hubbereich angesteuert werden kann, um das Dampf- bzw. Gasturbinenventil oder die Prozessarmatur einzustellen.

In der Notfallfunktion meldet die SPS (übergeordnete Steuerung) 78 über die Feldbus- bzw. Analogschnittstelle (Verbindung 79) und über den Digitaleingang Notfall 90 einen Notfall an die Regeleinrichtung 76. Des Weiteren wird über die SPS und die Ansteuerleitung 88 das Schaltventil 32 angesteuert. Die Regeleinrichtung 76 nimmt dann den Spindelmotor 4 aus der Regelung heraus. Gegebenenfalls kann die SPS mittels Sicherheitsrelais den Motor direkt aus der Regelung herausnehmen.

Zur Überprüfung der Notfallfunktion während des Betriebs wird das Schaltventil 32 kurzzeitig stromlos geschaltet. Der Kolben 20 muss sich dann entsprechend in Richtung UT (Figur 3) bewegen. Falls erforderlich, kann der Spindelmotor 4 angesteuert werden, um den Mitnehmer 14 der Kolbenbewegung entgegen zu wirken, damit der Federspeicher 18 nicht unnötig entlastet wird.

Über den Überwachungsschalter 111 wird die - geringe - Bewegung des Kolbens 20 detektiert, so dass die Funktion des Notfallantriebs erkannt wird. Falls sich der Kolben 20 nicht bewegt, ist die Notfallfunktion nicht gewährleistet - die Spanneinrichtung muss dann entsprechend gewartet werden.

Nach Überprüfung der Notfallfunktion wird das Schaltventil 32 wieder bestromt und der Federspeicher 18 verriegelt. Im Anschluss daran muss dann wieder dafür gesorgt werden, dass der Federspeicher 18 wieder auf seine ursprüngliche Vorspannung zurückgebracht wird. Der Federspeicher 18 kann mittels einer internen Pumpe (der Fangkolben wird zu diesem Zweck durch geeignete Schaltung der Wegeventile als Pumpe benutzt) oder externen Pumpe oder über den Spindelmotor 4 vorgespannt werden.

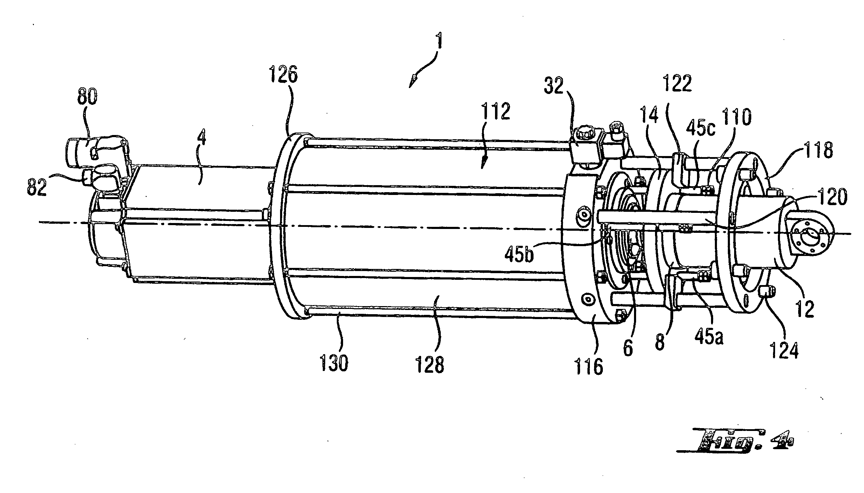

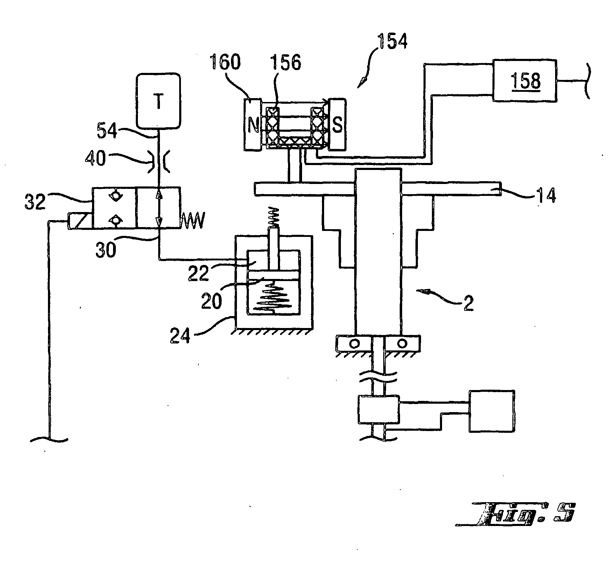

Figur 4 zeigt ein konkretes Ausführungsbeispiel der erfindungsgemäßen Stelleinrichtung 1, bei der die vorbeschriebenen Bauelemente im Wesentlichen zu einer Baueinheit zusammengefügt sind. In der dreidimensionalen Darstellung erkennt man den Spindelmotor 4 mit dem Anschluss für die Versorgungsleitung 80 und für die Feedback-Signalleitung 82. Der Spindelmotor 4 ist axial an ein Spindelgehäuse 112 angesetzt, in dem - wie anhand von Figur 5 näher erläutert wird - der Federspeicher 18, der Betätigungszylinder 24 und der Fangzylinder 42 mit der Aufprallfeder 28 aufgenommen sind.

An einen Stirnflansch 116 des Spindelgehäuses 112 ist in Radialrichtung das als 2/2-Wegeventil ausgeführte elektrisch betätigte Schaltventil 32 angesetzt, über das - wie vorbeschrieben - eine Druckmittelverbindung zum ebenfalls im Spindelgehäuse 112 aufgenommenen Tank T herstellbar ist. Die vom Spindelmotor 4 angetriebene Spindel 6 durchsetzt das Spindelgehäuse 112 und kragt in Axialrichtung aus dem Stirnflansch 116 vor. Dieser Endabschnitt der Spindel 6 steht in Gewindeeingriff mit der Spindelmutter 8, an der einerseits die Konsole 12 zur Betätigung der Armatur und andererseits der scheibenförmige Mitnehmer 14 befestigt sind. Beim dargestellten Ausführungsbeispiel ist der in Figur 4 nicht sichtbare Fangkolben 44 mit vier am Umfang verteilten Kolbenstangen 45a, 45b, 45c und 45d (letztere in Figur 4 nicht sichtbar) ausgeführt, auf deren Endabschnitte jeweils die Anschlagmuttern 110 aufgeschraubt sind. Diese Kolbenstangen 45a, 45b, 45c, 45d durchsetzen den Stirnflansch 116 und auch den kreisscheibenförmigen Mitnehmer 14, so dass dieser nach einem Axialhub auf die Anschlagmuttern 110 aufläuft.

Im Axialabstand zum Stirnflansch 116 ist ein die Konsole 12 umgreifender Anschlagring 118 vorgesehen, der über vier am Umfang verteilte Längsstreben 120 an der benachbarten Stirnfläche des Stirnflansches 116 befestigt ist. An der zum Anschlagring 118 weisenden Stirnfläche des Mitnehmers 14 sind als Verdrehsicherung für die Spindelmutter 8 zwei diametral zueinander angeordnete Gleitstücke 122 befestigt, die von jeweils einer der Längsstreben gleitend durchsetzt sind. Wie Figur 4 weiter entnehmbar ist, läuft der Außenumfang des Mitnehmers 14 innerhalb des von den Längsstreben 120 aufgespannten Teilkreises. In den Anschlagring 118 sind des Weiteren noch vier auf einem gemeinsamen Teilkreis liegende Anschlagschrauben 124 eingeschraubt, die mit Bezug zu den Gleitstücken 122 versetzt sind und die zur Befestigung der Stelleinrichtung 1 am Gasturbinenveritil dienen.

Der Spindelmotor 4 ist an einen Motorflansch 126 des Spindelgehäuses 112 angesetzt, wobei sich zwischen diesem und dem Stirnflansch 116 ein Gehäusemantel 128 sowie Zuganker 130 erstrecken.

Wie bereits vorstehend erläutert, durchsetzt der in Figur 4 rechte Endabschnitt der Spindel 6 den Stirnflansch 116 und kämmt mit seinem Spindelgewinde mit der Spindelmutter 8, die ihrerseits mit dem Mitnehmer 14 und der Konsole 12 verbunden ist, so dass diese beiden Elemente die Axialverschiebung der drehfest gelagerten Mutter 8 mitmachen. Diese Verdrehsicherung erfolgt über die mit dem Mitnehmer 14 verbundenen Gleitstücke 122, die entlang der den Anschlagring 118 tragenden Längsstreben 120 verschiebbar geführt sind.

Bei dem zuvor erläuterten Ausführungsbeispiel ist der Fangzylinder 42 als Differentialzylinder ausgeführt. Anstelle dieses Differentialzylinders kann der Fangzylinder - wie in Figur 3 oben angedeutet - auch als Gleichgangzylinder mit einem Fangkolben 44 ausgeführt sein, der zwei Kolbenstangen 45a, 45b aufweist. Dabei durchsetzt die Fangkolbenstange 45b den Federraum für die Feder 46, in dem der Tankdruck anliegt.

Figur 5 zeigt eine Variante der vorbeschriebenen Stelleinrichtung, bei der als Fangeinrichtung anstelle des hydraulisch wirkenden Fangzylinders 42 ein Tauchspulensystem 154 verwendet wird. Dieses hat eine mit dem Mitnehmer 14 gekoppelte Tauchspule 156, die über eine von der USV 98 versorgte Tauchspulenregeleinrichtung 158 bestromt wird. Die Tauchspule 156 ist innerhalb eines von einem Permanentmagneten 160 erzeugten Magnetfeldes angeordnet, so dass bei bestromter Tauchspule 156 und Verstellung des Mitnehmers 14 durch die entsprechende Verschiebung der Tauchspule 156 innerhalb dieses Magnetfeldes eine der Mitnehmerbewegung 14 entgegen wirkende Kraft induziert wird, die der Ausfahrbewegung des Kolbens 20 der Betätigungseinrichtung 24 entgegenwirkt und diesen somit abbremst.

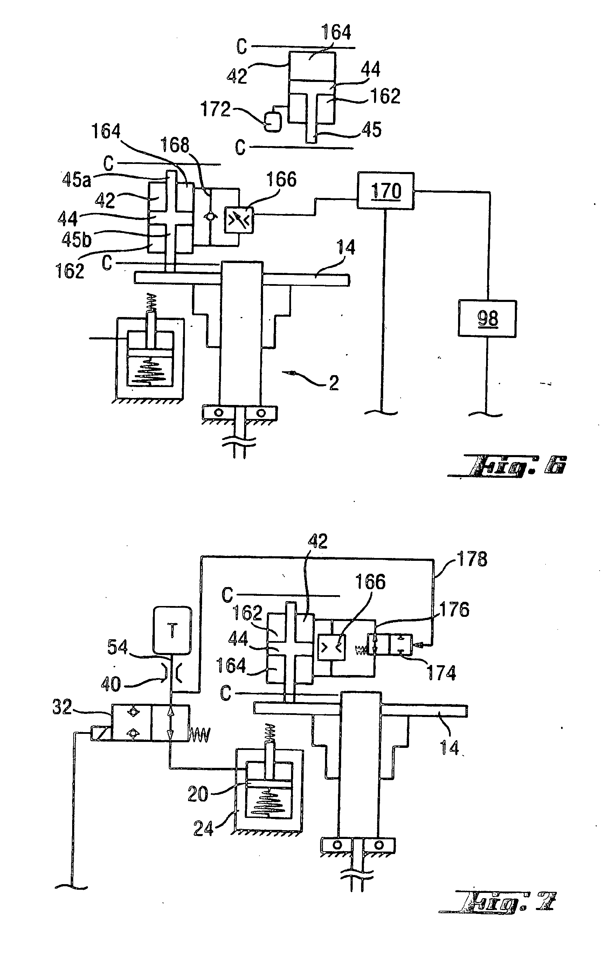

Bei diesem dargestellten Ausführungsbeispiel ist der hydraulische Teil der Stelleinrichtung entsprechend vereinfacht, da kein hydraulischer Fangzylinder 42 hydraulisch eingebunden werden muss. Gemäß Figur 5 ist der Ausgang des Schaltventils 32 an die Tankleitung 54 angeschlossen, wobei in dieser das Stromregelventil 40 zur Begrenzung des aus dem Druckraum 22 verdrängten Druckmittelvolumenstroms angeordnet ist. Dieses Stromregelventil 40 kann auch in dem den Druckraum 22 mit dem Eingang des Schaltventils 32 verbindenden Kanal 30 angeordnet werden. Beim Ausführungsbeispiel gemäß Figur 6 ist das Stromregelventil 40 als nicht verstellbare Blende oder Drossel ausgeführt.

Im Normalbetrieb der Stelleinrichtung ist die Tauchspule 156 stromlos geschaltet, so dass keinerlei Gegenkraft induziert wird.

Das Funktionsprinzip der Tauchspule beruht auf der Lorentzkraft. Eine ähnliche Wirkung kann man auch durch Kurzschließen der Spule oder über einen Hubmagneten realisieren.

Bei dem in Figur 6 dargestellten Ausführungsbeispiel ist eine hydraulische Lösung gezeigt, wobei als Fangeinrichtung ein Fangzylinder 42 verwendet wird, der ähnlich wie die in Figur 3 gezeigte Alternative als Gleichgangzylinder ausgeführt ist. Dementsprechend hat der Fangkolben 44 zwei gleich große Fangkolbenstangen 45a, 45b, wobei die in Figur 6 unten liegende direkt am Mitnehmer 14 des Spindeltriebs 2 anliegt. Der Fangkolben 44 unterteilt den Fangzylinder 42 in zwei Druckräume 162, 164 mit gleichem Querschnitt, die über eine Art Drosselrückschlagventil mit einem veränderlichen Drosselquerschnitt 166 und einem parallel geschalteten Rückschlagventil 168 miteinander verbunden sind. Der Drosselquerschnitt 166 kann über eine Drosselregeleinrichtung 170 verstellt werden. Die Regeleinrichtung 176 übermittelt über die Verbindung 106 der Drosselregeleinrichtung 170 die aktuelle Lage- bzw. die Geschwindigkeit des Spindeltriebes 2. Alternativ kann die aktuelle Lage über einen externen linearen Weggeber (nicht abgebildet), der die Lage des Spindeltriebes 2 direkt erfasst, der Drosselregeleinrichtung 170 zugeführt werden. Die USV 98 ist dafür zuständig, dass die Drosselregeleinrichtung 170 und das Meßsystem (externer Geber und/oder Regeleinrichtung 176) bei einem Spannungsausfall mit Spannung versorgt werden. Bei dieser Variante ist der Fangkolben 44 praktisch fest mit dem Mitnehmer 14 verbunden.

Im Normalbetrieb ist der Drosselquerschnitt 166 vollständig aufgesteuert, so dass die über den Fangzylinder 42 auf den Mitnehmer 14 wirkende Kraft vernachlässigbar ist. Im Notfallbetrieb wird der Drosselquerschnitt 166 über die Drosselregeleinrichtung 170 verringert, so dass entsprechend der Druckmittelvolumenstrom vom sich verkleinernden Druckraum 164 in den sich vergrößernden Druckraum 162 angedrosselt wird und entsprechend der Mitnehmer 14 abgebremst wird.

Um die Sicherheit zu erhöhen, kann zu dem als Stromregelventil wirkenden veränderlichen Drosselquerschnitt 166 eine zweite Drossel oder Blende in Reihe vorgeschaltet werden, die im Normalbetrieb durch eine geeignete Beschaltung umgangen wird und im Fehlerfall eine Mindestverzögerung der Spindel sicherstellt. Mit dem als Stromregelventil wirkenden veränderlichen Drosselquerschnitt 166 kann dann der Gesamtstrom geregelt werden. Mittels der Drosselregeleinrichtung 170 kann dann ein Zusatzstrom geregelt werden.

Bei einer ebenfalls in Figur 6 eingezeichneten alternativen Lösung wird anstelle zumindest eines Gleichgangzylinders ein Differentialzylinder verwendet, dessen Fangkolben 44 mit einer Fangkolbenstange 45 ausgeführt ist, die mit dem Mitnehmer 14 verbunden ist. Da das bei einer Bewegung des Fangkolbens 44 aus dem Druckraum 164 verdrängte Druckmittelvolumen größer ist als die Volumenänderung des Ringraums 162, ist diesem ein Speicher 172 zum Druckmittelausgleich zugeordnet.

Bei den Lösungen gemäß Figur 6 ist der Tank T ähnlich wie bei der Variante gemäß Figur 5 an den Ausgang des Schaltventils 32 angeschlossen.

Figur 7 zeigt eine Variante des anhand Figur 6 beschriebenen Ausführungsbeispiels, wobei ebenfalls eine mit dem Mitnehmer 14 mitlaufende Fangeinrichtung verwendet ist. Der Fangzylinder 42 ist wieder als Gleichgangzylinder ausgeführt, wobei die beiden Druckräume 162, 164 durch einen Drosselquerschnitt 166 verbunden sind, der bei diesem Ausführungsbeispiel nicht veränderlich ausgeführt ist. Parallel zum Drosselquerschnitt 166 ist ein hydraulisch betätigtes Umschaltventil 174 vorgesehen, das über eine Feder in eine Durchgangsstellung vorgespannt ist, in der eine den Drosselquerschnitt 166 umgehende Bypassleitung 176 geöffnet ist, so dass der Drosselquerschnitt 166 keine Wirkung hat und somit der Fangkolben 44 frei beweglich ist. Das Umschaltventil 174 kann durch den Druck in einer Umschaltleitung 178 umgeschaltet werden, über die der Druck am Ausgang des Schaltventils 32 abgegriffen wird. D.h. im Notfall und bei Stromlosschalten des Schaltventils 32 wird durch den ansteigenden Druck stromaufwärts des Stromregelventils 40 das Umschaltventil 174 in seine Sperrstellung verstellt, so dass das aus dem sich verkleinernden Druckraum 162 verdrängte Druckmittel über den Drosselquerschnitt 166 zum sich vergrößernden Druckraum 164 abströmt, so dass entsprechend die Bewegung des Mitnehmers 14 und damit des Kolbens 20 des Betätigungszylinders 24 gedämpft wird.

Ähnlich wie beim Ausführungsbeispiel in Figur 6 kann anstelle des als Gleichgangzylinder ausgeführten Fangzylinders 42 ein Differentialzylinder mit Speicher 172 zum Volumenausgleich verwendet werden.

In dem Fall, in dem das Umschaltventil 174 sehr schnell schalten soll, kann anstelle der hydraulischen Betätigung auch eine magnetische Betätigung durch Ansteuerung über die Regeleinrichtung 76 oder die übergeordnete SPS 78 erfolgen.

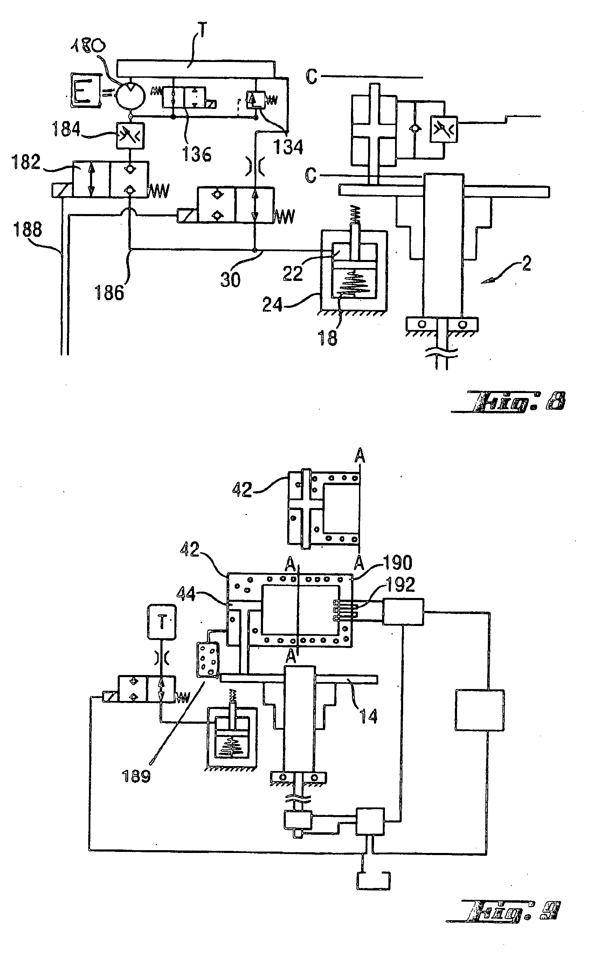

Figur 8 zeigt eine Variante, bei der das Füllen des Druckraums 22 nach der Notfallbetätigung nicht durch Rückverfahren mittels des Spindelantriebs 2 sondern über eine Hilfspumpe 180 erfolgt. Der Sauganschluss dieser Hilfspumpe 180 ist an den Tank T angeschlossen. Der Druckanschluss ist über eine Druckleitung an ein als Wegeventil ausgeführtes Pumpenventil 182 angeschlossen, wobei in dieser Druckleitung ein Pumpenstromregelventil 184 vorgesehen sein kann.

Der Ausgang des Pumpenventils 182 ist über eine Versorgungsleitung 186 an den im Druckraum 22 mündenden Kanal 30 angeschlossen. Die Ansteuerung des Pumpenventils 182 erfolgt über eine Pumpensignalleitung 188, die an die Regeleinrichtung 76 oder die übergeordnete SPS 78 angeschlossen ist.

Der Druck am Ausgang der Hilfspumpe 180 kann über ein Druckbegrenzungsventil 134 begrenzt werden. Ein Umlaufventil 130 ermöglicht einen drucklosen Umlauf, um den Anlauf der Pumpe sicher zu stellen.

Zum Spannen des Federspeichers 18 wird das Pumpenventil 182 über die Pumpensignalleitung 188 bestromt. Gleichzeitig wird die Pumpe 180 angesteuert, so dass diese Druckmittel aus dem Tank T ansaugt und über das geöffnete Pumpenventil 182, die Versorgungsleitung 186 und den Kanal 30 in den Druckraum 22 fördert, um den Federspeicher 18 zu laden.

Diese Lösung hat den Vorteil, dass die Regelung der Gasturbine durch die Prüfung der Notfallfunktion nicht beeinflusst wird, da das Schaltventil 32 in seiner Sperrstellung verbleibt und somit die Verriegelung des Kolbenspeichers 18 während des Aufladens aufrechterhalten wird.

Das Aufladen des Federspeichers 18 mittels einer Hilfspumpe 180 ist im Prinzip bei allen beschriebenen Ausführungsbeispielen anwendbar.

Figur 9 zeigt ein Ausführungsbeispiel einer mit dem Mitnehmer 14 mitlaufenden Fangeinrichtung, die mit einer elektro- oder magnetorheologischen Flüssigkeit ausgeführt ist. Beim dargestellten Ausführungsbeispiel ist der Mitnehmer 14 mit einem als Flüssigkeitsdämpfer mit Speicher 189 ausgeführten Fangzylinder 42 gekoppelt, wobei - wie bei den zuvor beschriebenen Ausführungsbeispielen - der Fangkolben 44 vom Mitnehmer 14 mitbewegt wird. Dieser Fangkolben 44 wirkt als Verdränger, über den die magnetorheologische Flüssigkeit in einen Umlaufkanal 190 verdrängt wird, der mit dem Fangzylinder 42 einen geschlossenen Flüssigkeitskreislauf bildet, in dem die magnetorheologische Flüssigkeit angeordnet ist. Der von der Fangkolbenstange 45 durchsetzte Ringraum ist mit dem Speicher 189 verbunden. In dem Umlaufkanal 190 wird die magnetorheologische Flüssigkeit einem Magnetfeld ausgesetzt, so dass die Strömung im Umlaufkanal 190 behindert und entsprechend die Kolbenbewegung und somit die Mitnehmerbewegung 14 verlangsamt oder gedämpft werden. Das Permanentmagnetfeld kann mittels einer Neutralisierungsspule 192 neutralisiert werden, so dass im Normalbetrieb der Stelleinrichtung 1 dem Verschieben der magnetorheologischen Flüssigkeit im Umfaufkanal 190 kein nennenswerter Widerstand entgegen gesetzt wird, da bei bestromter Neutralisierungsspule 192 ein Gegenfeld erzeugt wird, das das Permanentmagnetfeld aufhebt. Im Notfallbetrieb wird die Neutralisierungsspule 192 stromlos geschaltet, so dass die magnetorheologische Flüssigkeit dem Permanentmagnetfeld ausgesetzt ist und somit eine die Mitnehmerbewegung 14 abbremsende Kraft erzeugt wird.

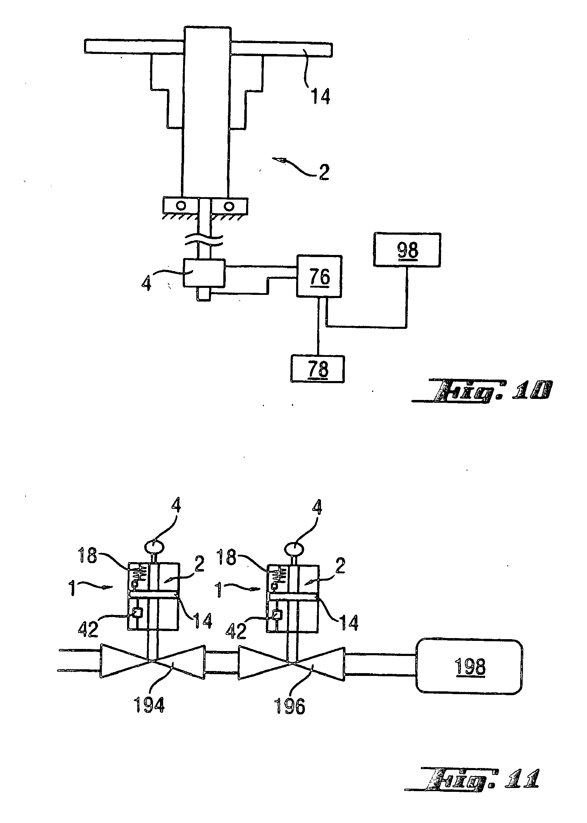

Insbesondere im Kraftwerksbereich müssen die Stelleinrichtungen 1 zur Einstellung der Dampf- oder Gaszufuhr einer Turbine so ausgeführt sein, dass bei der Notfallbetätigung eine mechanische - von einer Stromversorgung unabhängige - Rückstellung erfolgt. D.h. bei derartigen Varianten ist stets ein mechanischer Speicher, wie beispielsweise der Federspeicher 18 vorzusehen, über den das Gästurbinenventil zurückgestellt werden kann. Es gibt allerdings auch Anwendungen, bei denen derartige mechanische Lösungen nicht zwangsweise vorgeschrieben sind. In diesem, in Figur 10 gezeigten Fall kann die Rückstellung des Spindeltriebs 2 zum Schließen des Gasturbinenventils auch über die USV 98 gesteuert werden. Da diese USV 98 nicht nur die Steuerspannungen sondern auch die Leistungsversorgung für den Spindelmotor 4 bereitstellt (unter Umständen eine 3-Phasen-Wechselspannung) kann der Spindelmotor 4 die Notfallfunktion auch bei einem Stromausfall ausführen, indem er den Spindeltrieb 2 zum Schließen des Gasturbinenventils geregelt zurückfährt. Dabei handelt es sich somit um eine reine elektrische Lösung. Die Anmelderin behält sich vor, auf diese Lösung einen eigenen unabhängigen Anspruch zu richten.

Zur Erhöhung der Betriebssicherheit können gemäß Figur 11 auch zwei Gasturbinenventile 194, 196 zur Steuerung des Brennstoffvolumens zu einer Gasturbine 198 in Reihe geschaltet werden, wobei beide Gasturbinenventile 194, 196 jeweils mit einer erfindungsgemäßen Stelleinrichtung 1 ausgeführt sein können, wobei der Notfallantrieb (Federspeicher 18) und die Fangeinrichtung (Fangzylinder 42) jeweils schematisch angedeutet sind. Der Spindelmotor 4 des Spindeltriebs 2 kann dabei wahlweise als Servomotor oder als gesteuerter Antrieb, beispielsweise als Asynchronmotor ausgeführt sein. Prinzipiell ist es auch möglich, die Lösung gemäß Figur 10 mit einer der Lösungen gemäß den Figuren 1 bis 9 zu kombinieren, so dass dann zum Beispiel eine mechanische Rückstellung und eine Rückstellung mittels USV vorgesehen sind. Dabei kann beispielsweise eine der Stelleinrichtungen die Regelung im Normalbetrieb der Gasturbine übernehmen, während bei der anderen Stelleinrichtung die Notfallfunktion überprüft wird, ohne dass die Regelung der Gasturbine beeinflusst wird.

Mit einem derartigen redundanten System ist die Betriebssicherheit der Gasturbine 198 wesentlich erhöht.

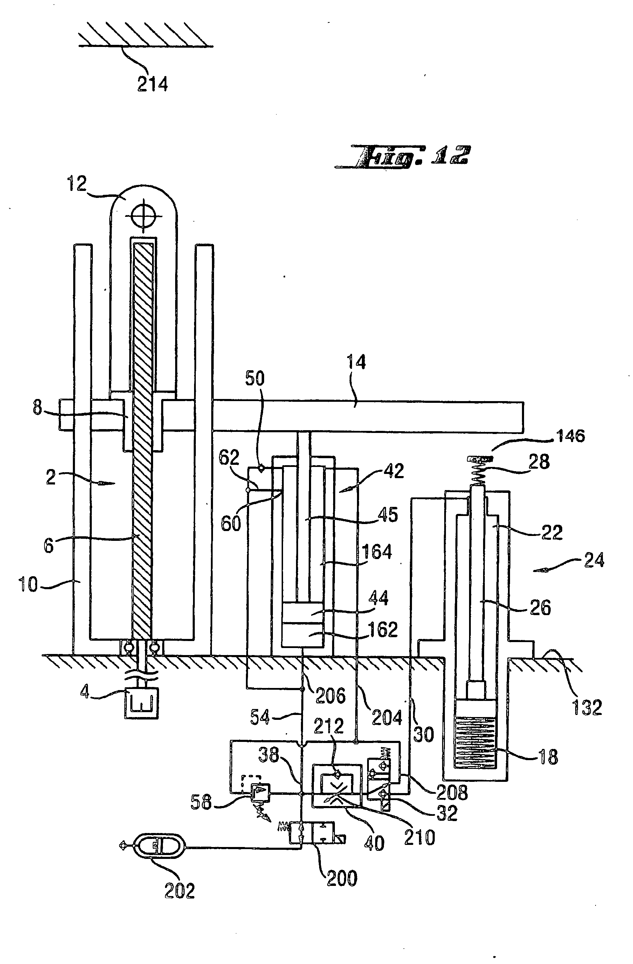

Figur 12 zeigt ein bevorzugtes Ausführungsbeispiel der Erfindung, bei dem der Fangkolben 45 des Fangzylinders 42 - ähnlich wie bei den Ausführungsbeispielen gemäß den Figuren 6 und 7 mit dem Mitnehmer 14 mitläuft. Der Grundaufbau des Spindeltriebs 2 und des Betätigungszylinders 24 entspricht demjenigen der vorbeschriebenen Ausführungsbeispiele, so dass diesbezüglich auf die obigen Ausführungen verwiesen werden kann. Wie bei allen vorbeschriebenen Ausführungsbeispielen sind das Gestell 10 des Spindeltriebs 2, der Betätigungszylinder 24 und auch der Fangzylinder 42 an einer gemeinsamen Basis 132 abgestützt. Bei diesem Ausführungsbeispiel ist der Fangzylinder 42 als Differentialzylinder ausgeführt, wobei eine Fangkolbenstange 45 des Fangkolbens 44 mit dem Mitnehmer 14 gekoppelt ist, so dass der Fangkolben 44 entsprechend des Hubs der Mutter 8 des Spindeltriebs 2 mitfährt.

Der sich in Schließrichtung des Gasturbinenventils (Verfahren der Mutter 8 in Figur 12 nach oben) verkleinernde Druckraum des Fangzylinders 42 wird in Anlehnung an das Ausführungsbeispiel gemäß Figur 6 mit dem Bezugszeichen 164 und der sich dabei vergrößernde, bodenseitige Druckraum mit dem Bezugszeichen 162 versehen.

Der von der Fangkolbenstange 45 durchsetzte ringförmige Druckraum 164 ist über den Ablaufkanal 62 mit der Tankleitung 54 verbunden. Ähnlich wie beim vorbeschriebenen Ausführungsbeispiel wird beim Verkleinern des Druckraums 164 im Endhubbereich ein Drosselspalt 60 wirksam, über den der aus dem ringförmigen Druckraum 164 abströmende Druckmittelvolumenstrom angedrosselt wird.

Beim dargestellten Ausführungsbeispiel ist in der Tankleitung 54 ein Tankventil 200 vorgesehen. Dieses ist als Schaltventil ausgeführt und in eine Grundposition vorgespannt, in der die Tankleitung 54 zum Tank geöffnet ist, der bei diesem Ausführungsbeispiel als hydraulischer Speicher 202 ausgeführt ist, der über Gasdruck oder eine mechanische Feder mit beispielsweise ca. 5 bar vorgespannt ist. Durch Bestromen eines Schaltmagneten des Tankventils 200 lässt sich dieses in eine Sperrstellung bringen, in der die Druckmittelverbindung zum Speicher 202 abgesperrt ist. In sämtlichen Hubpositionen des Fangkolbens 44 ist der ringförmige Druckraum 164 über eine Druckbegrenzungsleitung 204 und das Druckbegrenzungsventil 58 mit der Tankleitung 54 verbunden, so dass der Maximaldruck im Druckraum 164 entsprechend der Einstellung des Druckbegrenzungsventils 58 begrenzt ist. Der bodenseitige Druckraum 162 des Fangzylinders 42 ist über eine Tankzweigleitung 206 mit der Tankleitung 54 verbunden. Wie bei den zuvor beschriebenen Ausführungsbeispielen ist der Druckraum 22 des Betätigungszylinders 24 über den Kanal 30, das Schaltventil 32, die Entlastungsleitung 38 sowie das Stromventil 40 mit der Tankleitung 54 verbunden.

Das Schaltventil 32 ist dabei als 3/2-Wegeventil ausgeführt, das in Figur 12 in seiner Schaltstellung dargestellt ist. In seiner federvorgespannten Grundposition ist die Druckmittelverbindung zwischen dem Kanal 30 und der Entlastungsleitung 38 aufgesteuert, während sie in der Schaltposition abgesperrt ist. Dabei ist dann die Entlastungsleitung 38 mit einem Verbindungskanal 208 verbunden, der in die Druckbegrenzungsleitung 204 einmündet. Dadurch ist in der Grundposition des Schaltventils 32 praktisch der Druckraum 164 über die Druckbegrenzungsleitung 204, den Verbindungskanal 208, das Schaltventil 32, das Stromventil 40 und - bei geschlossenem Tankventil 200 über die Tankleitung 54 und die Tankzweigleitung 206 mit dem bodenseitigen Druckraum 162 verbunden.

Gemäß Figur 12 ist das Stromventil 40 bei diesem Ausführungsbeispiel als Drosselrückschlagventil mit einer verstellbaren Drossel 210 und einem in Richtung zum Schaltventil 32 öffnenden Rückschlagventil 212 ausgeführt.

Bei dem vorbeschriebenen Ausführungsbeispiel wird die Fangfunktion somit nicht durch Auflaufen des Mitnehmers 14 auf den Fangkolben 44 sondern durch Zusteuern des Drosselspaltes 60 aktiviert. Bei einer Störung wird das als 3/2-Wegeventils ausgeführte Schaltventil 32 stromlos geschaltet, so dass es in seine federvorgespannte Grundposition zurückgestellt wird, in der die Druckmittelverbindung zwischen dem Kanal 30 und der Entlastungsleitung 38 aufgesteuert ist. Das Druckmittel kann dann in der vorbeschriebenen Weise aus dem Druckraum 22 über den Kanal 30, das Schaltventil 32, das Stromventil 40 und das ebenfalls in seine Öffnungsstellung federvorgespannte Tankventil 200 zum Speicher 202 (Tank) abströmen. Durch die Entlastung des Druckraums 22 wird der Federspeicher 18 entspannt, so dass entsprechend die Kolbenstange 26 ausfährt und nach einem vergleichsweise geringen Hub die Aufprallfeder 28 auf den Mitnehmer 14 aufläuft. Die Aufprallfeder 28 wird gestaucht und nach einem weiteren Hub der Mitnehmer 14 beschleunigt, wobei entsprechend die Kolbenstange 26 abgebremst wird. In diesem Stadium haben der Mitnehmer 14 und die Kolbenstange 26 zunächst die gleiche Geschwindigkeit. Der Spindelmotor 4 und die Spindel 6 werden dabei beschleunigt, wobei die Spindeldrehzahl relativ schnell ansteigt bis der Axialvorschub der Spindelmutter 8 schneller ist als die Ausfahrbewegung der Kolbenstange 26. Die Aufprallfeder 28 entspannt sich dabei und der Mitnehmer 14 eilt der Kolbenstange 26 voraus, so dass die Anlage zwischen diesen beiden Bauelementen aufgehoben wird. Dabei sind die beiden Druckräume 164, 162 beide mit dem Speicher 202 verbunden, so dass sich kein Druck aufbauen kann (abgesehen vom Vorspanndruck des Kolbenspeichers).

Bei einem weiteren Hub des Mitnehmers 14 und damit auch des Fangkolbens 44 beginnt die Androsselung des aus dem Druckraum 164 abströmenden Druckmittels über den Drosselspalt 60. Dabei hat sich zunächst im Druckraum 164 noch kein Druck ausgebildet.

Zu diesem Zeitpunkt eilt der Mitnehmer 14 der Kolbenstange 26 des Betätigungszylinders 24 noch leicht voraus. Durch die Androsselung im Drosselspalt 60 wird im Druckraum 164 ein Dämpfungsdruck aufgebaut, so dass die Mitnehmerbewegung gebremst wird und die weiter über den Federspeicher 18 beschleunigte Kolbenstange 26 wieder auf den Mitnehmer 14 aufläuft. Entsprechend der Abbremsung des Mitnehmers 14 wird auch die Spindeldrehzahl verringert. Beim Auflaufen der Kolbenstange 26 auf den Mitnehmer 14 wird die Aufprallfeder 28 wieder gestaucht und die Kolbenstange 26 abgebremst. Der Fangkolben 44 steuert dann allmählich den Drosselspalt 60 zu, so dass der Mitnehmer 14 durch den weiter ansteigenden Dämpfungsdruck im Druckraum 164 abgebremst wird. Kurz vor dem Auflaufen der Konsole 12 auf einen turbinenventilseitigen Anschlag 214 ist die Kolbenstange 26 durch die Stauchung der Aufprallfeder 28 und durch die Endlagendämpfung auf eine vergleichsweise geringe Geschwindigkeit abgebremst. Entsprechend ist auch die Geschwindigkeit des Mitnehmers 14 durch den Druck im Zylinderraum 164 verringert. Die Konsole 12 läuft dann auf den ventilseitigen Anschlag 214 auf, so dass der Mitnehmer 14 abrupt abgebremst wird und dabei noch etwas nachschwingt, wobei diese Schwingung durch das Federpaket 18 und die Aufprallfeder 28 ermöglicht ist. Bei Auflaufen der Konsole 12 auf den Anschlag 214 ist dann das Gasturbinenventil geschlossen und wird auch in dieser Position gehalten.

Eine Besonderheit des vorbeschriebenen Ausführungsbeispiels besteht darin, dass der Federspeicher 18 mit Hilfe des Fangzylinders 42 aufgeladen werden kann. Diese Pumpfunktion wird als interne Pumpfunktion bezeichnet und läuft nach Auslösung der Notfunktion wie folgt ab:

Das Schaltventil 32 und das Tankventil 200 bleiben unbestromt, so dass beide Ventile in eine Stellung vorgespannt sind, in der die Druckmittelverbindung zwischen dem Druckraum 22 und dem Speicher 202 geöffnet ist. Durch Ansteuerung des Spindelmotors 4 wird dann der vollständig ausgefahrene Fangkolben 44 um einen vorbestimmten Hub nach unten gefahren, so dass sich der ringförmige Druckraum 164 vergrößert und der bodenseitige Druckraum 162 entsprechend verkleinert wird. Das aus diesem verdrängte Druckmittel kann über die Tankzweigleitung 206 und die Tankleitung 54 zum ringförmigen Druckraum 164 strömen, so dass dieser mit Druckmittel gefüllt wird. Die Überschussmenge wird vom Druckraum 162 über das Tankventil 200 zum Speicher 202 ausgeschoben. Durch die eben beschriebene Bewegung wird auch die Kolbenstange 26 des Betätigungszylinders 24 durch Krafteinwirkung von Mitnehmer 14 über Aufprallfeder 28 unter Spannen des Federspeichers 18 nach unten bewegt. In den sich dabei vergrößernden Druckraum 22 strömt Druckmittel vom Speicher 202 über Tankventil 200, Rückschlagventil 212, Schaltventil 32 und Kanal 30. Nach dem vorbestimmten Hub des Fangkolbens 44 wird das Schaltventil 32 bestromt und in seine in Figur 12 dargestellte Position umgestellt, in der der Druckraum 22 leckagefrei abgesperrt ist. Anschließend wird der Fangkolben 44 durch Ansteuerung des Spindeltriebs 2 über den Mitnehmer 14 wieder ausgefahren, so dass der bodenseitige Druckraum 162 entsprechend vergrößert und über das weiterhin geöffnete Tankventil 200 mit Druckmittel aus dem Speicher 202 gefüllt wird. Aus dem sich verkleinernden Druckraum 164 wird das Druckmittel über die Druckbegrenzungsleitung 204 und das Schaltventil 32 ausgeschoben. Anschließend wird das Tankventil 200 in seine Sperrstellung umgeschaltet, so dass die Druckmittelverbindung zum Speicher 202 abgesperrt ist. Dann wird das Schaltventil 32 stromlos geschaltet, so dass der Druck im Druckraum 22 im gesamten Hydrauliksystem (bis auf den separierten Speicher 202) wirkt. Dadurch wird keine wesentliche Bewegung des Mitnehmers 14 oder der Kolbenstange 26 bewirkt.

Anschließend wird der Spindeltrieb 2 angesteuert und der Mitnehmer 14 um einen vorbestimmten Hub nach unten verfahren, so dass entsprechend der Fangkolben 44 einfährt und Druckmittel aus dem bodenseitigen Druckraum 162 verdrängt (Pumpwirkung) und in den Druckraum 22 gefördert wird, so dass der Federspeicher 18 gespannt wird.

Im nächsten Schritt wird das Schaltventil 32 wieder bestromt und dadurch die Druckmittelverbindung zum Druckraum 22 abgesperrt. Das Tankventil 200 wird stromlos geschaltet, so dass die Druckmittelverbindung zum Speicher 202 geöffnet ist und beide Druckräume 164, 162 mit dem Speicher 202 verbunden sind und somit mit dem Druck im Speicher 202 beaufschlagt sind.

Der Pumpzyklus beginnt dann wieder von vorne bis der Federspeicher 18 vollständig gespannt ist. Die Anmelderin behält sich vor, auf das Ausführungsbeispiel gemäß Figur 12, insbesondere die Doppelfunktion des Fangzylinders 42 als Dämpfungseinrichtung und als Pumpe einen eigenen unabhängigen Anspruch zu richten, in dem lediglich die zur Funktion erforderlichen Bauelemente beansprucht werden.

Prinzipiell können alle Antriebe und Fangeinrichtungen hydraulisch oder pneumatisch ausgeführt sein. Die Regeleinrichtung für die Fangeinrichtung ist lediglich optional, da alle vorgestellten Systeme im Prinzip auch ohne diese Regeleinrichtung (Stromregeleinrichtung 102) funktionieren. Ohne eine derartige Stromregeleinrichtung 102 wird das Stromregelventil 40 auf einen konstanten Wert eingestellt, so dass auch im ungünstigsten Fall die Rückstellbewegung des Spindeltriebs 2 kontrolliert ablaufen kann.

Wie bereits ausgeführt, können alle Zylinder als Gleichgang-, Plunger- oder Differentialzylinder (letztere mit Speicher) ausgeführt sein. Das Stromventil 40 kann alternativ auch zwischen dem Umschaltventil 32 und dem Druckraum 22 vorgesehen werden.

Die vorgenannte USV 98 ist lediglich optional vorgesehen. Alle Varianten außer dem Ausführungsbeispiel gemäß Figur 10 funktionieren auch ohne diese USV 98. Abgesehen von diesem Ausführungsbeispiel dient die USV 98 in erster Linie dazu, die Steuerspannung für die Stromregeleinrichtung 102 bereitzustellen. Dieser werden die Gebersignale des Spindelmotors 4 zugeführt (alternativ kann auch ein Lastgebersignal verwendet werden, das direkt die lineare Bewegung des Mitnehmers miterfasst). In der Regeleinrichtung ist ein Geschwindigkeitsregler implementiert, der ein Stellgrößensignal berechnet und damit zum Beispiel die Drosseleinrichtung 40 (in diesem Fall als Stromregelventil implementiert) derart verstellt, dass der Mitnehmer auch im Notbetrieb (angetrieben durch den Federspeicher 18) mit konstanter Geschwindigkeit fährt. Falls die Motorgebersignale verwendet werden, muss die USV 98 auch die Steuerspannung für die Regeleinrichtung 76 bereitstellen. In dem Fall, in dem die USV 98 ausfällt, kann die Notfunktion trotzdem ausgeführt werden, indem dafür gesorgt wird, dass immer ein Dämpfungspfad vorhanden ist (z. B. durch Vorschalten einer Düse, welche zwar nicht die Geschwindigkeit regelt, aber diese auf ein Minimum reduziert, so dass die Mechanik nicht beschädigt wird). Beim Ausführungsbeispiel gemäß Figur 11 stellt die USV 98 nicht nur die Steuerspannung sondern auch die Leistungsversorgung bereit und kann daher nur bei weniger sicherheitskritischen Anlagen verwendet werden.

Offenbart ist eine Stelleinrichtung für eine Vorrichtung, beispielsweise ein Gas- oder Dampfturbinenventil oder allgemein eine Prozessarmatur zur Steuerung eines Prozessfluids, mit einem elektrischen Stellantrieb und einer Notbetätigungseinrichtung zum Rückstellen der Vorrichtung bei einer Störung mittels eines Stellglieds. Die Notbetätigungseinrichtung ist mit einem Energiespeicher ausgeführt, dessen gespeicherte Energie zum Rückstellen des Stellglieds ausgenutzt wird. Erfindungsgemäß ist dem Energiespeicher ein Kolben zugeordnet, der zum Aufladen des Energiespeichers durch den Druck in einem Druckraum beaufschlagt ist, der über ein Schaltventil mit einem Tank oder dergleichen verbindbar ist, so dass der Kolben durch den sich entladenden Energiespeicher verstellt wird. Der Kolben wirkt mit dem Stellglied des Stellantriebs zusammen, um diesen in Rückstellrichtung zu verstellen.

### Bezugszeichenliste

- 1: Stelleinrichtung
- 2: Spindeltrieb
- 4: Spindelmotor
- 6: Spindel
- 8: Mutter
- 10: Gestell
- 12: Konsole
- 14: Mitnehmer
- 16: Notbetätigungseinrichtung
- 18: Federspeicher
- 20: Kolben
- 22: Druckraum
- 24: Betätigungszylinder
- 26: Kolbenstange
- 28: Aufprallfeder
- 30: Kanal
- 32: Schaltventil
- 34: Vorspannfeder
- 36: Schaltmagnet
- 38: Entlastungsleitung
- 40: Stromventil
- 42: Fangzylinder
- 44: Fangkolben
- 45: Fangkolbenstange
- 46: Feder
- 48: Zylinderraum
- 50: Rückschlagventil
- 52: Bypassleitung
- 54: Tankleitung
- 56: vorgespanntes Rückschlagventil
- 58: Druckbegrenzungsventil
- 60: Drosselspalt
- 62: Ablaufkanal
- 64: Füllleitung
- 66: Rückschlagventil
- 68: Dämpfungsabschnitt
- 72: Dämpfungsringraum
- 74: Fangkolbenstange
- 76: Regeleinrichtung
- 78: SPS
- 79: Verbindung
- 80: Versorgungsleitung
- 82: Feedbacksignalleitung
- 84: Signalleitung
- 88: Ansteuerleitung
- 90: Digitaleingang Notfall
- 92: Drucküberwachung
- 94: Drucküberwachungsleitung
- 98: USV
- 100: Leitungen
- 102: Stromregeleinrichtung
- 104: Stromregelsignalleitung
- 106: Signalweiterleitung
- 108: Steuerspannungsleitung
- 110: Anschlagmutter
- 111: Überwachungsschalter
- 112: Spindelgehäuse
- 116: Stirnflansch
- 118: Anschlagring
- 120: Längsstrebe
- 122: Gleitstück
- 124: Anschlagschraube
- 126: Motorflansch
- 128: Gehäusemantel
- 130: Zuganker
- 132: Basis
- 134: Druckbegrenzungsventil
- 136: Umlaufventil
- 146: Anlagefläche
- 154: Tauchspulensystem
- 156: Tauchspule
- 158: Tauchspulenregeteinrichtung
- 160: Permanentmagnet
- 162: Druckraum
- 164: Druckraum
- 166: Drosselquerschnitt
- 168: Rückschlagventil
- 170: Drosselregeleinrichtung
- 172: Speicher
- 174: Umschaltventil
- 176: Bypassleitung
- 178: Umschaltleitung
- 180: Hilfspumpe
- 182: Pumpenventil
- 184: Pumpenstromregelventil
- 186: Versorgungsleitung
- 188: Pumpensignalleitung
- 189: Speicher
- 190: Umlaufkanal
- 192: Neutralisierungsspule
- 194: Gasturbinenventil
- 196: Gasturbinenventil
- 198: Gasturbine
- 200: Tankventil
- 202: Speicher
- 204: Druckbegrenzungsleitung
- 206: Tankzweigleitung
- 208: Verbindungskanal
- 210: verstellbare Drossel
- 212: Rückschlagventil
- 214: ventilseitiger Anschlag

## Patentansprüche

1. Stelleinrichtung für eine Vorrichtung, beispielsweise ein Ventil, insbesondere ein Ventil zur Steuerung der Dampf- oder Gaszufuhr einer Turbine oder insbesondere eine Prozessarmatur zur Steuerung eines Prozessfluids, mit einem Stellantrieb zur Betätigung der Vorrichtung mittels eines Stellglieds (8, 12) und mit einer Notbetätigungseinrichtung zum vom Stellantrieb im Wesentlichen unabhängigen Rückstellen des Stellglieds (8, 12) bei einer Störung, mit einem Energiespeicher, dessen gespeicherte Energie zum Rückstellen freisetzbar ist, wobei der Energiespeicher (18) mit einem Kolben (20) zusammenwirkt, der seinerseits einen flüssigkeitsgefüllten Druckraum (22) begrenzt, der über ein Schaltventil (32) mit einem Tank (T) oder dergleichen verbindbar ist, wobei der Kolben (20) dazu angeordnet ist, das Stellglied (8, 12) bei einer Entlastung des Druckraums (22) in Rückstellrichtung zu verstellen,
wobei eine Dämpfungseinrichtung mit dem Stellglied (8, 12) gekoppelt ist,
wobei die Dämpfungseinrichtung mit dem Stellglied (8, 12) über einen Mitnehmer (14) gekoppelt ist, **dadurch gekennzeichnet, dass**
die Dämpfungseinrichtung einen mit dem Stellglied (8, 12) mechanisch gekoppelten Gleichgang- oder Differentialzylinder umfasst,
dass der Gleichgang- oder Differentialzylinder einen sich bei der Bewegung des Stellglieds (8, 12) verkleinernden Druckraum (164) hat, der über eine Dämpfungsdrossel (166) bzw. einen Drosselspalt mit einem anderen, sich entsprechend vergrößernden Druckraum (162) verbunden ist, und dass dem Kolben (20) eine Endlagendämpfung zugeordnet ist, bei der ein Endabschnitt (68) des Kolbens (20) in einen Dämpfungsringraum (72) eintaucht und Druckmittel verdrängt.

2. Stelleinrichtung nach Patentanspruch 1, wobei die Dämpfungseinrichtung einen im Druckmittelströmungspfad zwischen dem Schaltventil (32) und dem Tank (T) angeordneten Fangzylinder (42) mit einem von einer Feder (46) in Schließrichtung vorgespannten Fangkolben (44) hat, der in Öffnungsrichtung von dem Druck stromabwärts des Schaltventils (32) beaufschlagt ist, und der nach einem vorbestimmten Hub einen Drosselquerschnitt (60) zum Tank (T) aufsteuert, wobei der Fangkolben (44) im Endlagenbereich des Kolbens (20) vom Stellglied (8, 12) in Schließrichtung bewegbar ist.

3. Stelleinrichtung nach einem der Patentansprüche 1 oder 2, wobei der Dämpfungsdrossel (166) oder dem Drosselspalt ein Umschaltventil (174) parallel geschaltet ist, das zum Dämpfen in eine Schließstellung verstellbar ist.

4. Stelleinrichtung nach Patentanspruch 3, wobei das Umschaltventil und das Schaltventil eine bauliche Einheit bilden, welche insbesondere als 3/2-Wege-Schaltventil dargestellt ist.

5. Stelleinrichtung nach einem der Patentansprüche 1 bis 4, wobei die Dämpfungsdrossel als Drosselrückschlagventil mit einem verstellbaren Drosselquerschnitt (166) ausgeführt ist.

6. Stelleinrichtung nach einem der vorhergehenden Patentansprüche, wobei der Kolben (26) stellgliedseitig eine Aufprallfeder (28) hat, die beim Auflaufen auf das Stellglied (8, 12) spannbar ist.

7. Stelleinrichtung nach Patentanspruch 6, wobei die Aufprallfeder (28) mit einer funkenhemmend ausgeführten Anlagefläche (146) versehen ist.

8. Stelleinrichtung nach einem der vorhergehenden Patentansprüche, mit einer Hilfspumpe (180) zum Druckbeaufschlagen des Druckraums (22).

9. Stelleinrichtung nach Patentanspruch 2, mit einem Druckbegrenzungsventil (58) zum Begrenzen des Drucks im Druckmittelströmungspfad zwischen dem Schaltventil (32) und dem Fangzylinder (42).

10. Stelleinrichtung nach Patentanspruch 2, mit einer Bypassleitung (52) zwischen einem stromaufwärts des Fangzylinders (42) gelegenen Teils und dem Tank (T), wobei in der Bypassleitung (52) ein zum Tank (T) hin öffnendes Rückschlagventil (56) vorgesehen ist, dessen Öffnungsdruck größer als der zum Verstellen des Fangzylinders (42) erforderliche Druck ist.

11. Stelleinrichtung nach einem der vorhergehenden Patentansprüche, wobei im Druckmittelströmungspfad zwischen dem Druckraum (22) und dem Tank (T) ein Stromventil (40), insbesondere eine Drossel vorgesehen ist.

12. Stelleinrichtung nach einem der Patentansprüche 1 bis 11, wobei der Stellantrieb ein elektrisch angetriebener Spindeltrieb (2) ist.

13. Stelleinrichtung nach einem der Patentansprüche 1 bis 12, wobei der Stellantrieb pneumatisch oder hydraulisch wirkt.

14. Stelleinrichtung nach einem der vorhergehenden Patentansprüche, wobei der Energiespeicher ein mechanischer Speicher, insbesondere eine Feder (18), ein komprimiertes Fluid bzw. Gas, und/oder ein Elastomer ist.

15. Stelleinrichtung nach einem der vorhergehenden Patentansprüche, wobei die Bauelemente zu einer Antriebseinheit zusammengefasst sind.

16. Stelleinrichtung nach Patentanspruch 15, wobei der Stellantrieb (2, 4), der Energiespeicher (18) und der Druckraum (22) koaxial um eine Stellachse der Stelleinrichtung angeordnet sind.

17. Stelleinrichtung nach einem der vorhergehenden Patentansprüche, wobei ein geschlossenes insbesondere vorgespanntes hydraulisches System vorhanden ist, welches den Druckraum (22) und/oder die Dämpfungseinrichtung umfasst.

18. Stelleinrichtung nach einem der vorhergehenden Patentansprüche, wobei die Dämpfungseinrichtung als Pumpzylinder zum Füllen des Druckraums (22) konfigurierbar ist.

19. Stelleinrichtung nach einem der vorhergehenden Patentansprüche, wobei die Position des Stellglieds durch ein Wegmesssystem insbesondere durch ein lineares Wegmesssystem oder mehrere Wegmeßsysteme erfassbar ist.

20. Stelleinrichtung nach einem der vorhergehenden Patentansprüche, wobei Mittel vorgesehen sind, mittels derer die Temperatur innerhalb des Gehäusemantels 128 in einem vorbestimmten Temperaturbereich gehalten wird.

21. Stelleinrichtung nach einem der Patentansprüche 1 bis 20, wobei Mittel vorgesehen sind, insbesondere ein Ventil, durch welche die Dämpfungseinrichtung feststellbar ist und die durch die Notbetätigungseinrichtung übersteuerbar sind.

22. Stelleinrichtung nach einem der vorhergehenden Patentansprüche, wobei Mittel zur Durchführung eines Funktionstests der Notbetätigungseinrichtung im Normalbetrieb vorgesehen sind, insbesondere Detektionsmittel, insbesondere ein Schalter, welcher einen Beginn der Rückstellbewegung des Kolbens (20) erfasst.

23. Ventilanordnung, insbesondere Gasturbinenventilanordnung oder Dampfturbinenventilanordnung mit einer Stelleinrichtung (1) nach einem der vorhergehenden Patentansprüche.

24. Ventilanordnung nach Patentanspruch 23, mit zwei hintereinander geschalteten, jeweils mit einer Stelleinrichtung (1) ausgeführten Ventilen.

## Claims

1. Actuating device for an apparatus, for example a valve, in particular a valve for controlling the supply of steam or gas to a turbine or, in particular, a process fitting for controlling a process fluid, with an actuating drive for actuating the apparatus by means of an actuator (8, 12) and with an emergency actuation device for resetting the actuator (8, 12) essentially independently of the actuating drive in the event of a fault, with an energy accumulator, the stored energy of which can be released for resetting, the energy accumulator (18) cooperating with a piston (20) which, in turn, delimits a liquid-filled pressure space (22) which is connectable via a switching valve (32) to a tank (T) or the like, the piston (20) being arranged for adjusting the actuator (8, 12) in the resetting direction in the event of a relief of the pressure space (22), a damping device being coupled to the actuator (8, 12), the damping device being coupled to the actuator (8, 12) via a driver (14), **characterized in that** the damping device comprises a synchronous or differential cylinder coupled mechanically to the actuator (8, 12), **in that** the synchronous or differential cylinder has a pressure space (164) which decreases during the movement of the actuator (8, 12) and which is connected via a damping throttle (166) or a throttle gap to another pressure space (162) increasing correspondingly, and **in that** the piston (20) is assigned a limit stop damping in which an end portion (68) of the piston (20) penetrates into an annular damping space (72) and displaces pressure medium.

2. Actuating device according to Patent Claim 1, the damping device having an arresting cylinder (42) arranged in the pressure-medium flow path between the switching valve (32) and the tank (T) and having an arresting piston (44) which is prestressed in the closing direction by a spring (46) and which is acted upon in the opening direction by the pressure downstream of the switching valve (32), and which after a predetermined stroke opens a throttle cross section (60) to the tank (T), the arresting piston (44) being moveable in the closing direction by the actuator (8, 12) in the limit stop region of the piston (20).

3. Actuating device according to either one of Patent Claims 1 and 2, a changeover valve (174), which is adjustable into a closing position for damping purposes, being connected in parallel to the damping throttle (166) or the throttle gap.

4. Actuating device according to Patent Claim 3, the changeover valve and the switching valve forming a structural unit which, in particular, is presented as a 3/2-way switching valve.

5. Actuating device according to one of Patent Claims 1 to 4, the damping throttle being designed as a throttle non-return valve with an adjustable throttle cross section (166).

6. Actuating device according to one of the preceding patent claims, the piston (26) having on the actuator side an impact spring (28) which can be tensioned when the said piston runs onto the actuator (8, 12).

7. Actuating device according to Patent Claim 6, the impact spring (28) being provided with a sparkinhibiting bearing surface (146).

8. Actuating device according to one of the preceding patent claims, with an auxiliary pump (180) for acting with pressure upon the pressure space (22).

9. Actuating device according to Patent Claim 2, with a pressure-limiting valve (58) for limiting the pressure in the pressure-medium flow path between the switching valve (32) and the arresting cylinder (42).

10. Actuating device according to Patent Claim 2, with a bypass line (52) between a part located upstream of the arresting cylinder (42) and the tank (T), there being provided in the bypass line (52) a non-return valve (56) which opens towards the tank (T) and the opening pressure of which is higher than the pressure required for adjusting the arresting cylinder (42).

11. Actuating device according to one of the preceding patent claims, a flow valve (40), in particular a throttle, being provided in the pressure-medium flow path between the pressure space (22) and the tank (T).

12. Actuating device according to one of Patent Claims 1 to 11, the actuating drive being an electrically driven spindle drive (2).

13. Actuating device according to one of Patent Claims 1 to 12, the actuating drive acting pneumatically or hydraulically.

14. Actuating device according to one of the preceding patent claims, the energy accumulator being a mechanical accumulator, in particular a spring (18), a compressed fluid or gas and/or an elastomer.

15. Actuating device according to one of the preceding patent claims, the structural elements being combined into a drive unit.

16. Actuating device according to Patent Claim 15, the actuating drive (2, 4), the energy accumulator (18) and the pressure space (22) being arranged coaxially around an actuating axis of the actuating device.

17. Actuating device according to one of the preceding patent claims, a closed, in particular pressurized hydraulic system being present, which comprises the pressure space (22) and/or the damping device.

18. Actuating device according to one of the preceding patent claims, the damping device being configurable as a pumping cylinder for filling the pressure space (22).

19. Actuating device according to one of the preceding patent claims, the position of the actuator being detectable by a position-measuring system, in particular by a linear position-measuring system or a plurality of position-measuring systems.

20. Actuating device according to one of the preceding patent claims, means being provided by which the temperature inside the casing jacket (128) is maintained in a predetermined temperature range.

21. Actuating device according to one of Patent Claims 1 to 20, means being provided, in particular a valve, by which the damping device can be locked and can be overridden by the emergency actuation device.

22. Actuating device according to one of the preceding patent claims, means for carrying out a functional test of the emergency actuation device in normal operation being provided, in particular detection means, in particular a switch which detects a commencement of the resetting movement of the piston (20).

23. Valve arrangement, in particular gas turbine valve arrangement or steam turbine valve arrangement with an actuating device (1) according to one of the preceding patent claims.

24. Valve arrangement according to Patent Claim 23, with two valves connected in series and each designed with an actuating device (1).

## Revendications

1. Système de réglage pour un dispositif, par exemple une soupape, en particulier une soupape pour la commande de l'alimentation en vapeur ou en gaz d'une turbine ou en particulier une armature de processus pour la commande d'un fluide de processus, comprenant un entraînement de réglage pour l'actionnement du dispositif au moyen d'un actionneur (8, 12) et comprenant un système d'actionnement de secours pour le rappel de l'actionneur (8, 12) essentiellement indépendamment de l'entraînement de réglage en cas de perturbation, comprenant un accumulateur d'énergie dont l'énergie accumulée peut être libérée pour le rappel, l'accumulateur d'énergie (18) coopérant avec un piston (20) qui limite pour sa part un espace de pression rempli de fluide (22) qui peut être relié par le biais d'une soupape de commutation (32) à un réservoir (T) ou similaire, le piston (20) étant disposé de manière à déplacer l'actionneur (8, 12) dans la direction de rappel dans le cas d'une détente de l'espace de pression (22), un système d'amortissement étant accouplé à l'actionneur (8, 12), le système d'amortissement étant accouplé à l'actionneur (8, 12) par le biais d'un dispositif d'entraînement (14), **caractérisé en ce que** le système d'amortissement comprend un cylindre à double tige ou un cylindre différentiel accouplé mécaniquement à l'actionneur (8, 12), **en ce que** le cylindre à double tige ou le cylindre différentiel a un espace de pression (164) se rétrécissant lors du déplacement de l'actionneur (8, 12), lequel est relié par le biais d'un étranglement d'amortissement (166) ou d'une fente d'étranglement à un autre espace de pression (162) augmentant en conséquence, et **en ce qu'**un amortissement de position de fin de course est associé au piston (20), dans lequel amortissement une portion d'extrémité (68) du piston (20) plonge dans un espace annulaire d'amortissement (72) et refoule du fluide sous pression.

2. Système de réglage selon la revendication 1, dans lequel le système d'amortissement a un cylindre de collecte (42) disposé dans le chemin d'écoulement de fluide sous pression entre la soupape de commutation (32) et le réservoir (T) avec un piston de collecte (44) précontraint par un ressort (46) dans la direction de fermeture, qui est sollicité dans la direction d'ouverture par la pression en aval de la soupape de commutation (32), et qui, après une levée prédéterminée, commande à l'ouverture une section transversale d'étranglement (60) vers le réservoir (T), le piston de collecte (44) pouvant être déplacé dans la région de position de fin de course du piston (20) par l'actionneur (8, 12) dans la direction de fermeture.

3. Système de réglage selon l'une quelconque des revendications 1 ou 2, dans lequel une soupape d'inversion (174) est montée en parallèle avec l'étranglement d'amortissement (166) ou avec la fente d'étranglement, et peut être réglée dans une position de fermeture pour l'amortissement.

4. Système de réglage selon la revendication 3, dans lequel la soupape d'inversion et la soupape de commutation forment une unité constructive, qui est constituée notamment sous forme de soupape de commutation à 3/2 voies.

5. Système de réglage selon l'une quelconque des revendications 1 à 4, dans lequel l'étranglement d'amortissement est réalisé sous forme de clapet anti-retour à étranglement avec une section transversale d'étranglement réglable (166).

6. Système de réglage selon l'une quelconque des revendications précédentes, dans lequel le piston (26) présente, du côté de l'actionneur, un ressort d'impact (28) qui peut être tendu lors de sa venue en butée sur l'actionneur (8, 12).

7. Système de réglage selon la revendication 6, dans lequel le ressort d'impact (28) est pourvu d'une surface d'appui (146) réalisée de manière à empêcher les étincelles.

8. Système de réglage selon l'une quelconque des revendications précédentes, comprenant une pompe auxiliaire (180) pour solliciter en pression l'espace de pression (22).

9. Système de réglage selon la revendication 2, comprenant une soupape de limitation de la pression (58) pour limiter la pression dans le chemin d'écoulement du fluide sous pression entre la soupape de commutation (32) et le cylindre de collecte (42).

10. Système de réglage selon la revendication 2, comprenant une conduite de dérivation (52) entre une partie située en amont du cylindre de collecte (42) et le réservoir (T), un clapet anti-retour (56) s'ouvrant vers le réservoir (T) étant prévu dans la conduite de dérivation (52), dont la pression d'ouverture est supérieure à la pression requise pour déplacer le cylindre de collecte (42).

11. Système de réglage selon l'une quelconque des revendications précédentes, dans lequel, dans le chemin d'écoulement de fluide sous pression entre l'espace de pression (22) et le réservoir (T) est prévue une soupape d'écoulement (40), notamment un étranglement.

12. Système de réglage selon l'une quelconque des revendications 1 à 11, dans lequel l'entraînement de réglage est un entraînement à broche (2) à commande électrique.

13. Système de réglage selon l'une quelconque des revendications 1 à 12, dans lequel l'entraînement de réglage agit de manière pneumatique ou hydraulique.

14. Système de réglage selon l'une quelconque des revendications précédentes, dans lequel l'accumulateur d'énergie est un accumulateur mécanique, en particulier un ressort (18), un fluide ou un gaz comprimé, et/ou un élastomère.

15. Système de réglage selon l'une quelconque des revendications précédentes, dans lequel les composants sont rassemblés en une unité d'entraînement.

16. Système de réglage selon la revendication 15, dans lequel l'entraînement de réglage (2, 4), l'accumulateur d'énergie (18) et l'espace de pression (22) sont disposés coaxialement autour d'un axe de réglage du système de réglage.

17. Système de réglage selon l'une quelconque des revendications précédentes, dans lequel un système hydraulique fermé, notamment précontraint, est prévu, lequel comprend l'espace de pression (22) et/ou le système d'amortissement.

18. Système de réglage selon l'une quelconque des revendications précédentes, dans lequel le système d'amortissement peut être configuré sous forme de cylindre de pompe pour le remplissage de l'espace de pression (22).

19. Système de réglage selon l'une quelconque des revendications précédentes, dans lequel la position de l'actionneur peut être détectée par un système de mesure de déplacement, notamment par un système de mesure de déplacement linéaire ou par plusieurs systèmes de mesure de déplacement.

20. Système de réglage selon l'une quelconque des revendications précédentes, dans lequel des moyens sont prévus, au moyen desquels la température à l'intérieur de l'enveloppe de boîtier (128) est maintenue dans une plage de température prédéterminée.

21. Système de réglage selon l'une quelconque des revendications 1 à 20, dans lequel des moyens sont prévus, notamment une soupape, pour permettre de bloquer le système d'amortissement et qui peuvent être neutralisés par le système d'actionnement de secours.

22. Système de réglage selon l'une quelconque des revendications précédentes, dans lequel des moyens pour mettre en oeuvre un test de fonctionnement du système d'actionnement de secours en mode de fonctionnement normal sont prévus, notamment des moyens de détection, en particulier un commutateur, qui détecte un début de mouvement de rappel du piston (20).

23. Agencement de soupape, en particulier agencement de soupape de turbine à gaz ou agencement de soupape de turbine à vapeur, comprenant un système de réglage (1) selon l'une quelconque des revendications précédentes.

24. Agencement de soupape selon la revendication 23, comprenant deux soupapes montées l'une derrière l'autre, réalisées chacune avec un système de réglage (1).
